# EUROPEAN PATENT APPLICATION

(11) **EP 4 815 554 A1**
(43) Date of publication of application: **30.09.2026**
(21) Application number: 24907785.0
(22) Date of filing: 08.11.2024
(51) Int. Cl.: H04W 28/086, H04L 47/34, H04W 28/084, H04W 8/24, H04L 1/1812, H04L 1/1829, H04W 80/02, H04W 88/08

(54) **METHOD FOR PERFORMING RLC MIGRATION IN WIRELESS NETWORK SYSTEM AND ELECTRONIC DEVICE FOR PERFORMING METHOD**

(30) Priority: 20.12.2023 KR 20230187634; 25.04.2024 KR 20240055578
(71) Applicant: Samsung Electronics Co., Ltd., Suwon-si, Gyeonggi-do 16677 (KR)
(72) Inventor: KIM, Taeyoung, Suwon-si, Gyeonggi-do 16677 (KR); PARK, Hanjung, Suwon-si, Gyeonggi-do 16677 (KR); OH, Beomseok, Suwon-si, Gyeonggi-do 16677 (KR); AHN, Heungseop, Suwon-si, Gyeonggi-do 16677 (KR)
(74) Representative: Appleyard Lees IP LLP
(86) International application number: PCT/KR2024/017589
(87) International publication number: WO 2025/135500

(57) **Abstract**

Disclosed are a method and an electronic device for performing RLC migration in a wireless network system. The method comprises the steps of: identifying, based on a scaling situation, a source RLC of a first distributed unit (DU) to which data is to be migrated and a target RLC of a second DU to which data is to be migrated from the source RLC; issuing a command for data forwarding from the source RLC to the target RLC; identifying a downlink reference sequence number for downlink data obtained from a centralized unit (CU) based on a forwarding command time point; delivering the migration information of the source RLC to the target RLC; transmitting downlink data processed from one of the source RLC or the target RLC to a medium access control (MAC) of the second DU based on the downlink reference sequence number; and changing the F1-U interface of the CU to the CU and the target RLC.

## Description

### TECHNICAL FIELD

Embodiments disclosed in the present disclosure relate to a method of performing radio link control (RLC) migration of a wireless network system and an electronic device for performing the method.

### BACKGROUND ART

In a radio access network (RAN) system, because one cell site is connected to one distributed unit (DU), the processing (or conversion) capacity of the DU is determined according to maximum traffic that may enter the cell site. Resources of the DU are not used except during a time when maximum traffic occurs.

A virtualized RAN (vRAN) system may perform a function of the RAN by virtualizing a DU or a centralized unit (CU) into a virtualized DU (vDU) and a virtualized CU (vCU), based on software rather than hardware, and executing the vDU and the vCU through a general-purpose server device.

The DU and the cell site (e.g., a set of RUs) of the RAN may have a 1:1 connection relationship with each other, but vDU pooling in the vRAN may break such a 1:1 connection relationship and perform virtualization through DU pooling, thereby reducing the number of servers.

### DISCLOSURE OF INVENTION

### SOLUTION TO PROBLEM

The present disclosure may be implemented in various ways including a method, a system, a device, or a computer program stored in a computer-readable storage medium.

In an embodiment of the present disclosure, a method of performing radio link control (RLC) migration of a radio network system may include, based on a scaling situation, identifying a source RLC of a first distributed unit (DU) from which data is to be migrated and a target RLC of a second DU to which the data is to be migrated from the source RLC. In an embodiment of the present disclosure, the method may include transmitting, to the source RLC, a data forwarding command from the source RLC to the target RLC. In an embodiment of the present disclosure, the method may include, based on a time point of the data forwarding command, identifying a downlink reference sequence number for downlink data obtained from a centralized unit (CU). In an embodiment of the present disclosure, the method may include delivering migration information of the source RLC to the target RLC. In an embodiment of the present disclosure, the method may include, based on the downlink reference sequence number, delivering the downlink data processed from one of the source RLC or the target RLC to a medium access control (MAC) of the second DU. In an embodiment of the present disclosure, the method may include changing an F1-U interface of the CU to the CU and the target RLC.

In an embodiment of the present disclosure, a program for performing the method on a computer may be recorded on a computer-readable recording medium.

In an embodiment of the present disclosure, an electronic device for performing radio link control (RLC) migration of a wireless network system may include: a memory storing one or more instructions; and at least one processor configured to execute the one or more instructions stored in the memory. In an embodiment of the present disclosure, the at least one processor may be configured to execute the one or more instructions to cause the electronic device to identify a source RLC of a first distributed unit (DU) from which data is to be migrated and a target RLC of a second DU to which the data is to be migrated from the source RLC, based on a scaling situation. In an embodiment of the present disclosure, the at least one processor may be configured to execute the one or more instructions to cause the electronic device to transmit, to the source RLC, a data forwarding command from the source RLC to the target RLC. In an embodiment of the present disclosure, the at least one processor may be configured to execute the one or more instructions to cause the electronic device to identify a downlink reference sequence number for downlink data obtained from a centralized unit (CU) based on a time point of the forwarding command. In an embodiment of the present disclosure, the at least one processor may be configured to execute the one or more instructions to cause the electronic device to deliver migration information of the source RLC to the target RLC. In an embodiment of the present disclosure, the at least one processor may be configured to execute the one or more instructions to cause the electronic device to deliver the downlink data processed from one of the source RLC or the target RLC to a medium access control (MAC) of the second DU based on the downlink reference sequence number. In an embodiment of the present disclosure, the at least one processor may be configured to execute the one or more instructions to cause the electronic device to change an F1-U interface of the CU to the CU and the target RLC.

### BRIEF DESCRIPTION OF DRAWINGS

FIG. 1 is a block diagram illustrating a virtualized radio access network and a core network, according to an embodiment.
FIG. 2A is a block diagram illustrating a scale-out situation of a distributed unit (DU) according to an embodiment.
FIG. 2B is a block diagram illustrating a scale-in situation of a DU according to an embodiment.
FIG. 3 illustrates radio link control (RLC) migration of a DU according to an embodiment.
FIG. 4 is a flowchart illustrating a method of performing RLC migration of a DU according to an embodiment.
FIG. 5A is a block diagram illustrating a flow of transmitting downlink data before RLC migration according to an embodiment.
FIG. 5B illustrates a flow of transmitting downlink data when RLC migration is performed, according to an embodiment.
FIG. 5C illustrates a flow of transmitting downlink data after RLC migration is completed, according to an embodiment.
FIG. 6 illustrates a flow of delivering a user equipment (UE) context in a virtualized radio access network according to an embodiment.
FIG. 7 illustrates a flow of forwarding RLC data between a source RLC and a target RLC and delivering data in a virtualized radio access network according to an embodiment.
FIG. 8 illustrates downlink data stored in a source RLC according to an embodiment.
FIG. 9 illustrates a flow of changing an F1-U path of a centralized unit (CU) in a virtualized radio access network according to an embodiment.
FIG. 10 illustrates a method of performing RLC migration of a DU for uplink data in a virtualized radio access network according to an embodiment.
FIG. 11A is a block diagram illustrating a flow of transmitting uplink data before RLC migration according to an embodiment.
FIG. 11B illustrates a flow of transmitting uplink data when RLC migration is performed according to an embodiment.
FIG. 11C illustrates a flow of transmitting uplink data after RLC migration is completed according to an embodiment.
FIG. 12 illustrates a flow of transmitting uplink data during RLC migration according to an embodiment.
FIG. 13 illustrates uplink data stored in a buffer of a source RLC according to an embodiment.
FIG. 14 illustrates a flow of changing a medium access control (MAC)-RLC path and delivering uplink data according to an embodiment.
FIG. 15 is a flowchart illustrating a method of delivering a reception status message of a UE to a source RLC or a target RLC according to an embodiment.
FIG. 16A is a block diagram illustrating a path for processing a reception status message before an RLC-MAC path is changed according to an embodiment.
FIG. 16B is a block diagram illustrating a path for processing a reception status message after an RLC-MAC path is changed according to an embodiment.
FIG. 17 illustrates a flow of RLC migration and delivery of a reception status message according to an embodiment.
FIG. 18 illustrates downlink data stored in a UE according to an embodiment.
FIG. 19 illustrates reception status messages to be processed by a source RLC and a target RLC, generated by dividing a reception status message according to an embodiment.
FIG. 20 is a block diagram illustrating an electronic device according to an embodiment.

### MODE FOR THE INVENTION

Throughout the present disclosure, the expression "at least one of a, b, or c" indicates only a, only b, only c, both a and b, both a and c, both b and c, all of a, b, and c, or variations thereof.

The terms used herein have been selected as general terms which are widely used at present in consideration of the functions of the present disclosure, but the terms may vary according to the intention of one of ordinary skill in the art, precedent cases, or the appearance of new technologies. Also, some terms may be arbitrarily selected by the applicant, and in this case, the meaning of the selected terms will be described in detail in the detailed description. Therefore, the terms used in the present disclosure should be defined based on the meaning of the terms and the whole context of the present disclosure, rather than simple names of the terms.

The singular forms "a," "an," and "the" are intended to include the plural forms as well, unless the context clearly indicates otherwise. The terms used herein, including technical or scientific terms, may have the same meanings as those generally understood by one of ordinary skill in the art described in the present disclosure. It will be understood that, although the terms 'first', 'second', etc. may be used herein to describe various elements, these elements should not be limited by these terms. These terms are used only to distinguish one element from another.

Throughout the specification, when a part "includes" a certain component, this means that other components may be further included, rather than excluding other components, unless otherwise stated. Also, the term used in the embodiments such as "... unit" or "... module" indicates a unit for processing (or converting) at least one function or operation, and may be implemented in hardware, software, or a combination of hardware and software.

An embodiment of the present disclosure will now be described more fully with reference to the accompanying drawings for one of ordinary skill in the art to be able to perform the embodiment of the present disclosure without any difficulty. However, the present disclosure may be implemented in various different forms and is not limited to the embodiments described herein. In addition, in order to clearly describe the present disclosure in the drawings, parts irrelevant to the description are omitted, and similar reference numerals denote similar parts throughout the specification. Also, reference numerals used in each of drawings are provided for describing each drawing, and different reference numerals used in different drawings may not denote different elements.

Throughout the specification, when a part is "connected" to another part, the part may not only be "directly connected" or "physically connected" to the other part, but may also be "electrically connected" to the other part with another element in between. The terms "transmit," "receive," and "communicate" encompass both direct and indirect communication. Also, it will be understood that when a certain part "includes" or "comprises" a certain component, the part does not exclude another component but may further include another component, unless the context clearly dictates otherwise.

Throughout the present disclosure, unless otherwise stated, "or" is inclusive and not exclusive. Thus, unless expressly indicated otherwise or indicated otherwise in the context, "A or B" may represent "A, B, or both." In the present disclosure, the phrase "at least one of" or "one or more", when used with a list of items, may mean that different combinations of one or more of the listed items may be used or that only one item in the list may be needed. For example, "at least one of A, B, and C" may include any of the following combinations: A, B, C, A and B, A and C, B and C, or A and B and C.

The term "controller" may refer to any device, system, or portion thereof that controls at least one operation. The controller may be implemented in hardware, a combination of hardware and software, or firmware. The functionality associated with a particular controller may be local or remote, and may be centralized or distributed.

Also, the computer-readable storage medium may be provided as a non-transitory storage medium. The 'non-transitory storage medium' is a tangible device, and may exclude wired, wireless, optical, or other communication links that transmit transitory electrical or other signals. In this case, 'non-transitory' does not distinguish whether data is semi-permanently or temporarily stored in the storage medium. For example, the 'non-transitory storage medium' may include a buffer in which data is temporarily stored. The computer-readable medium may be any available medium that may be accessed by a computer and may include both volatile and non-volatile media, and removable and non-removable media. The computer-readable medium includes media where data may be permanently stored and media where data may be stored and later overwritten, such as a rewritable optical disc or an erasable memory device.

According to an embodiment, a method according to various embodiments disclosed herein may be included and provided in a computer program product. The computer program product may be traded between a seller and a buyer as a product. The computer program product may be distributed in the form of a machine-readable storage medium (e.g., a compact disc read-only memory (CD-ROM)), or distributed (e.g., downloaded or uploaded) through an application store (e.g., Play StoreTM) or directly or online between two user equipments (UEs) (e.g., smart phones). In the case of online distribution, at least a part of the computer program product (e.g., a downloadable app) may be at least temporarily stored in a machine-readable storage medium such as a memory of a manufacturer's server, a server of an application store, or a relay server, or may be temporarily generated.

Definitions for other specific words and phrases may be provided throughout the present disclosure. A person having ordinary skill in the art to which the present disclosure pertains will be able to understand that in various cases, the defined words and phrases may also be applied to past and future uses.

Each component to be described later in this specification may additionally perform some or all of the functions performed by other components in addition to its main functions, and some of the main functions of each component may be performed entirely by other components.

In the present disclosure, the term 'scaling' may refer to an operation of moving a determined configuration of a determined distributed unit (DU) to another DU according to a pre-determined criterion. Additionally, the term 'scaling' may include an operation of generating a DU to which a cell is to be moved before moving the cell, or deleting a DU from which the cell is moved after moving the cell. In addition, the term 'scaling' may be used as a collective term for a scale-in process and a scale-out operation.

In the present disclosure, the term 'scale-in' may include an operation of removing a DU determined as a scale-in target from a DU pool including the DU in a wireless network system according to a pre-determined criterion. In addition, required resources may be reduced by reducing the number of DUs that no longer require processing (or conversion) through the scale-in operation.

In the present disclosure, the term 'scale-out' may include a series of operations of determining a DU that is a scale-out target determined according to a pre-determined criterion, generating a new DU, and migrating data of the DU that is the scale-out target to the generated DU to distribute a processing (or conversion) amount. In other words, when a limit of DU capacity or performance is reached, the scale-out may improve overall performance by adding a DU of similar specifications and sharing a load of the existing DU.

In an embodiment of the present disclosure, 'migration' may refer to a series of processes of moving data of a source DU determined as a scaling target to another target DU in scaling. For example, DU 'migration' may include migration of at least one of information, a context, or an interface associated with the source DU. In the present disclosure, the term 'migration' may be used alternatively with transfer, movement, and relocation.

In an embodiment of the present disclosure, a source DU may represent a DU that is determined as a scaling target and from which data is migrated, and a source radio link control (RLC) may represent an RLC that is determined as a scaling target and from which data is migrated.

In an embodiment of the present disclosure, a target DU may represent a DU that is determined as a scaling target and to which data is to be migrated from the source DU, and a target RLC may represent an RLC that is determined as a scaling target and to which data is to be migrated from the source RLC.

In an embodiment of the present disclosure, 'RLC migration' may include migration of at least one of information, a context, or an interface associated with an RLC. For example, "RLC migration" may include migration of RLC configuration information. For example, "RLC migration" is migration in an RLC unit, and may include migration of RLC configuration information and a user equipment (UE) context of a UE associated with an RLC. For example, 'RLC migration' is migration in a UE unit, and may include migration of a UE context of a UE associated with an RLC. For example, "RLC migration" is migration in a UE unit, and may include migration of an interface (e.g., an F1-U interface) for user data.

In an embodiment of the present disclosure, a 'UE context' may include information for wireless communication of a UE in a wireless communication system. For example, a 'UE context' may include location information of a UE, a UE identifier, a status of a UE, service requirements, network and cell information currently in use, capability information of a UE, function information, security information, or authentication information. For example, a 'UE context' may include a unique number according to situations of UEs connected to a base station (e.g., a radio network temporary identifier (RNTI)), information about a downlink (DL) data volume for each UE (e.g., buffer occupancy (BO)), information about an uplink (UL) data volume for each UE (e.g., buffer status report (BSR)), a physical downlink control channel (PDCCH) monitoring period for a UE to transmit and receive new DL/UL traffic (e.g., discontinuous reception (DRX)), and retransmission information for each UE (e.g., hybrid automatic repeat request (HARQ) information). For example, a "UE context" may include different parameter values or data for a plurality of UEs associated with the same cell. For example, a 'UE context' may include common or shared parameter values or data for a plurality of UEs associated with the same cell.

In an embodiment of the present disclosure, a 'UE associated with a cell' may include a UE connected to the cell, a UE attached to the cell, a UE communicating (i.e., transmitting and receiving data) with a radio unit (RU) including the cell, a UE receiving a communication service through the cell, a UE transmitting and receiving data through the cell, a UE accessing a network through the cell, a UE included in a range (e.g., an effective range or a communication range) of the cell, a UE requesting a radio resource of the cell, or a UE to which a radio resource of the cell is allocated. For example, connection for one or more UEs associated with a target cell may be established and managed based on cell configuration information for the target cell.

In an embodiment of the present disclosure, "downlink data" may include all data directed to a UE in a wireless communication system. For example, "downlink data" may include data configured to be received by a UE and an acknowledgement (ack) or negative acknowledgement (ack) message to the UE.

In addition, in the present disclosure, even if a UE does not receive data, all types of data directed to the UE may be "downlink data". For example, when a base station transmits data to a core network, the core network delivers the data to a CU, and the CU processes (or converts) and delivers the data to a DU, even if a UE does not directly receive the data, all data in a process of delivering the data may be "downlink data" because the data is directed to the UE.

In an embodiment of the present disclosure, "uplink data" may include all data directed from a UE toward a base station in a wireless communication system. For example, "uplink data" may include capability information of a UE and an acknowledgement or negative acknowledgement message indicating whether the UE has completely received downlink data.

In addition, all types of data directed from a UE to a base station may be "uplink data". For example, when a UE delivers data to an RU, the RU delivers the data to a DU, and the DU delivers the data to the CU, even if the UE does not directly transmit the data, all data in a process of delivering the data may be "uplink data" because all data is directed toward a base station.

In an embodiment of the present disclosure, a "path" or an "interface" may include the meaning of a module (e.g., a software module or a hardware module) that enables data transmission and reception. In an embodiment of the present disclosure, a "path" or an "interface" may include the meaning of a logical or physical connection relationship. In an embodiment of the present disclosure, a "path" or an "interface" may include the meaning of a data transmission/reception path. In an embodiment of the present disclosure, "establishing an interface between A and B" may include the meaning of configuring A and B to transmit and receive data to and from each other and process (or convert) received data.

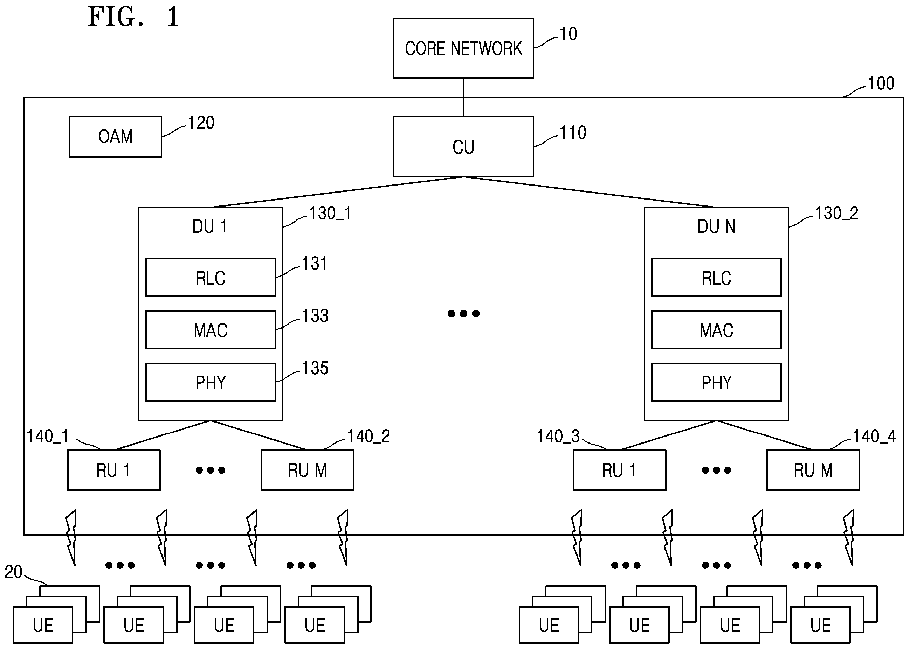

FIG. 1 is a block diagram illustrating a virtualized radio access network (v-RAN) and a core network according to an embodiment.

Referring to FIG. 1, a v-RAN 100 may include a centralized unit (CU) 110, an operation administration maintenance (OAM) 120, N distributed units (DUs) from a first DU 1 130_ 1 to an Nth DU N 130_ 2, and a plurality of radio units (RUs) 140_ 1, 140_ 2, 140_ 3, and 140_ 4 connected to each DU. The v-RAN 100 according to an embodiment of the present disclosure may connect a core network 10 to a plurality of UEs 20. For example, the v-RAN 100 may transmit data and signals between a base station and a UE by using radio access technology. For example, the v-RAN 100 may process initial access of the UE, data transmission between the base station and the UE, transmission and reception of user data and control commands between the core network 10 and the UE 20, quality of service (QoS) control for each service of each terminal, and the like.

The core network 10 according to an embodiment is the center of a mobile communication network and may control and manage core functions of a mobile communication system. For example, the core network 10 may perform functions such as user authentication and identification, line control, location management, and service provision. For example, the core network 10 may include user authentication information for each communication service provider, and may include a platform network that is wiredly connected to servers and systems of various service companies through an optical cable.

In an embodiment of the present disclosure, the v-RAN 100 may include a 5G system (5GS), a 4GS, or other known wireless communication systems, and may include a wireless communication system to be developed in the future.

In the v-RAN 100 according to an embodiment, some or all of network structures in the base station and an access network may be virtualized by using software technology and virtualization technology, and each network structure may be managed in a centralized data center or a cloud. For example, the CU 110 of the v-RAN 100 according to an embodiment may be implemented as a virtualized-CU (vCU), and at least one DU 130_1, . . . , 130_2 may be implemented as a virtualized-DU (vDU). According to an embodiment, when the CU 110 and the at least one DU 130_1, . . . , 130_2 are implemented as the vCU and the vDU, the CU 110 and the at least one DU 130_1, . . . , 130_2 may not operate as physical hardware devices and may perform functions of the CU and the DU as software modules.

When the at least one DU 130_1, . . . , 130_2 according to an embodiment is implemented as the vDU, vDU pooling technology may be applied to the at least one DU 130_1, . . . , 130_2. The vDU pooling technology may break a 1:1 matched relationship between a non-virtualized DU and a cell (or a set of RUs) and may pool and virtualize the DU, thereby reducing the number of servers required to construct a RAN system. Accordingly, the vDU pooling technology may reduce capital expenditure (CAPEX), and may reduce operational expenditure (OPEX) by reducing power consumption.

In a manner similar to implementing the at least one DU 130_1, . . . , 130_2 as the vDU, the CU 110 may also be implemented as a vCU, and as the CU 110 is implemented as the vCU, CAPEX and OPEX reduction effects may be obtained.

Here, the term "virtualization" may refer to a technology capable of expanding resources available in one device by integrating and managing a plurality of physical resources.

In the present disclosure, for convenience of description, it is assumed that the CU 110 and the at least one DU 130_1, . . . , 130_2 are implemented as the vCU and the vDU virtualized for the v-RAN. However, the present disclosure is not limited thereto. For example, in the v-RAN 100 according to an embodiment, only the at least one DU 130_1, . . . , 2 may be implemented as the vDU, and the CU 110 may not be virtualized.

In the present disclosure, for convenience of description, although the number of RUs connected to the DU of the v-RAN 100 or the number of UEs connected to the RU is constant, the present disclosure is not limited thereto. For example, the number of RUs connected to the DU 1 130_1 and the number of RUs connected to the DU N 130_2 may be different from each other, and the number of UEs connected to the RU 1 140_1 and the number of UEs connected to the RU M 140_2 may be different from each other.

The OAM 120 according to an embodiment may be connected to each unit including the CU and the RU of the v-RAN 100 and may control an operation of each unit. For example, the OAM 120 may control the DU 1 130_1 to change a medium access control (MAC) address of the DU 1 130_1, or control the DU 1 130_1 to transmit data or not to transmit data to at least one RU among the plurality of RUs 140_1, . . ., 140_2.

The OAM 120 according to an embodiment may refer to a set of functions and protocols supporting network operation, management, and maintenance. For example, the OAM 120 may not directly correspond to a specific network element, but may include a concept including functions necessary for the operation and management of the entire network. Accordingly, the OAM 120 according to an embodiment may be implemented as one specific device, but may be implemented by being combined with at least one unit among the CU 110, the at least one DU 130_1 to 130_2, and the plurality of RUs 140_1, ..., 140_4 in the v-RAN 100. In addition, the OAM 120 according to an embodiment may be implemented as a program or a module written in software of the v-RAN 100.

In an embodiment of the present disclosure, the CU 110 may be an entity that performs functions of some of protocol layers of a network. For example, the CU 110 may be an entity that performs network functions of a radio resource control (RRC) layer and a packet data convergence protocol (PDCP) layer, but functions that may be processed (converted) by the CU 110 are not limited to the above-described functions of the RRC layer and the PDCP layer. As an example, the CU 110 may perform functions such as quality of service (QoS) configuration, a function of reordering packets, etc., a security configuration and processing (or conversion) function, etc.

The DU 1 130_1 according to an embodiment may perform various radio access network functions for signal processing (or conversion) by functions of an radio link control (RLC) layer 131, an MAC layer 133, and a physical layer (PHY) layer 135. In addition, a plurality of DUs including the DU N 130_2 according to an embodiment may include layers having the same configuration as the DU 1 130_1. Hereinafter, the term 'RLC' may refer to an 'RLC layer' or an entity that performs at least some of functions of the RLC layer. The term 'MAC' may refer to an 'MAC layer' or an entity that performs at least some of functions of the MAC layer. The term 'PHY' may refer to a 'PHY layer' or an entity that performs at least some of functions of the PHY layer.

The RLC 131 according to an embodiment may include at least some of the following functions.
- Transfer of upper layer protocol data units (PDUs)
- In-sequence delivery of upper layer PDUs
- Out-of-sequence delivery of upper layer PDUs
- Error correction through automatic repeat request (ARQ)
- Concatenation, segmentation and reassembly of RLC SDUs
- Re-segmentation of RLC data
- Reordering of RLC data
- Duplicate detection
- Protocol error detection
- RLC SDU discard
- RLC re-establishment

The in-sequence delivery function of the RLC layer 131 refers to a function of delivering service data units (RLC SDUs) received from a lower layer to an upper layer in order, and when one RLC SDU is divided into several RLC SDUs and received, may include a function of reassembling and delivering the several RLC SDUs. In addition, the in-sequence delivery function may include at least one of a function of reordering received RLC PDUs based on an RLC sequence number (SN) or a PDCP SN, a function of recording lost RLC PDUs by reordering the sequence, and a function of transmitting a status report of the lost RLC PDUs to a transmitting side. In addition, the in-sequence delivery function may include a function of requesting retransmission of the lost RLC PDUs, and when there is a lost RLC SDU, may include a function of delivering only RLC SDUs before the lost RLC SDU to the upper layer in order. In addition, the in-sequence delivery function may include a function of delivering all RLC SDUs received before a certain timer starts to the upper layer in order when the timer expires even if there is a lost RLC SDU, or may include a function of delivering all RLC SDUs received so far to the upper layer in order when the timer expires even if there is a lost RLC SDU.

In an embodiment, the RLC PDU is used in the RLC 131, may include user data, and may include a header and a data part. Information about transmission may be included in the header of the RLC PDU. For example, downlink data may be converted into the RLC PDU in the RLC 131.

The RLC 131 according to an embodiment may process (or convert) RLC PDUs in an order in which the RLC PDUs are received, regardless of a sequence order, and may deliver the RLC PDUs to the PDCP layer. When a segment is received, the RLC 131 may combine the segment with a segment stored in a buffer or segments to be received later to reconstruct one complete RLC PDU, and then may deliver the RLC PDU to the PDCP layer. Meanwhile, in new radio (NR), the RLC 131 may not include a concatenation function, and the concatenation function may be performed in the MAC 133 or may be replaced with a multiplexing function of the MAC 133.

The RLC 131 according to an embodiment may store a UE context, may store data in a retransmission buffer, and may store data in a reception buffer.

Functions of the MAC 133 according to an embodiment may include at least some of the following functions.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The PHY 135 according to an embodiment may perform at least some of the following functions.
- Data transmission and reception using electrical Signals
- Channel coding/decoding function
- Modulation/Demodulation Function
- Power control
- Cell search

The PHY 135 may perform channel coding and modulation on data of an upper layer, may generate OFDM symbols, and may transmit the OFDM symbols through a radio channel. In addition, the PHY 135 may perform demodulation and channel decoding on the OFDM symbols received through the radio channel, and deliver data obtained as a result to the upper layer.

The PHY 135 according to an embodiment may refer to a high-PHY layer. The high-PHY layer may manage a high-PHY layer between a radio base station and a terminal device, and may perform data processing (or conversion), modem control, frequency spectrum management, and the like. In this case, a low-PHY layer may exist in the plurality of RUs 140_1, . . . , 140_4, and functions of the PHY 135 may be divided and performed.

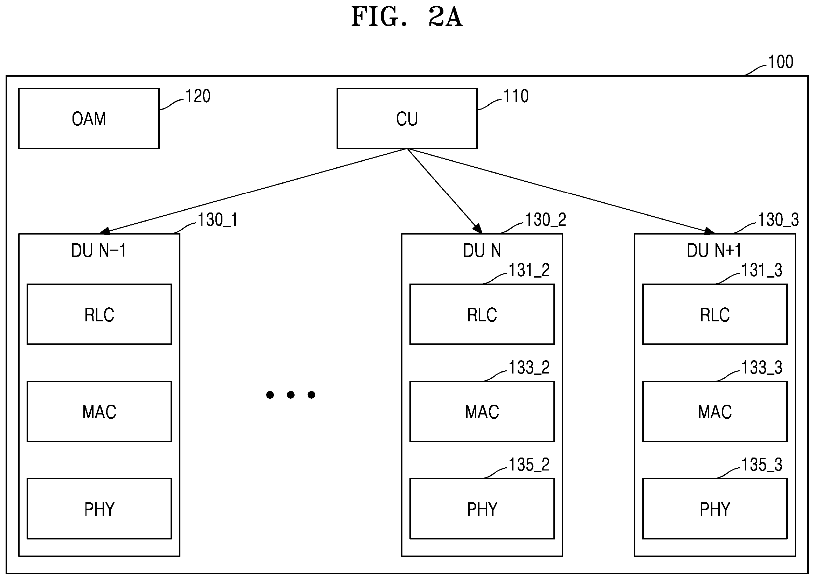

FIG. 2A is a block diagram illustrating a scale-out situation of a DU according to an embodiment.

Referring to FIG. 2A, in the v-RAN 100 according to an embodiment, the OAM 120 may receive information of each DU from the at least one DU 130_1, ..., 130_2 and may determine a scaling situation. For example, when the OAM 120 receives traffic information of the DU N 130_2 from the DU N 130_2 and determines that more resources are required than resources allocated to the DU N 130_2, the OAM 120 may determine that a scale-out situation occurs, may identify the DU N 130_2 as a source DU from which data is to be migrated, and may generate a DU N+1 130_3, which is a target DU to which the data is to be migrated from the source DU, so that some or all of the data of the DU N 130_2 may be migrated to the DU N+1.

According to an embodiment, an operation of migrating the data from the DU N 130_2 to the DU N+1 130_3 may be divided and performed such that the data is migrated from a PHY 135_2 of the DU N 130_2 to a PHY 135_3 of the DU N+1 130_3, migrated from an MAC 133_2 of the DU N 130_2 to an MAC 133_3 of the DU N+1 130_3, and migrated from an RLC 131_2 of the DU N 130_2 to an RLC 131_3 of the DU N+1 130_3 under the control of the OAM 120.

Also, according to an embodiment, operations in which the data is migrated from the PHY 135_2 of the DU N 130_2 to the PHY 135_3 of the DU N+1 130_3, migrated from the MAC 133_2 of the DU N 130_2 to the MAC 133_3 of the DU N+1 130_3, and migrated from the RLC 131_2 of the DU N 130_2 to the RLC 131_3 of the DU N+1 130_3 may be sequentially performed.

For example, first, the data may be migrated from the PHY 135_2 of the DU N 130_2 to the PHY 135_3 of the DU N+1 130_3, then may be migrated from the MAC 133_2 of the DU N 130_2 to the MAC 133_3 of the DU N+1 130_3, and then migrated from the RLC 131_2 of the DU N 130_2 to the RLC 131_3 of the DU N+1 130_3.

In the present disclosure, it is assumed that data is migrated in the order of the PHY, the MAC, and the RLC of the DU. However, the present disclosure is not limited thereto.

According to an embodiment, the OAM 120 may change (or switch) an F1-U path for receiving data from the CU 110, from the DU N 130_2 to the DU N+1 130_3 in the scale-out operation.

When both the path change and the data migration are completed, the OAM 120 may determine that the scale-out operation is completed (or terminated).

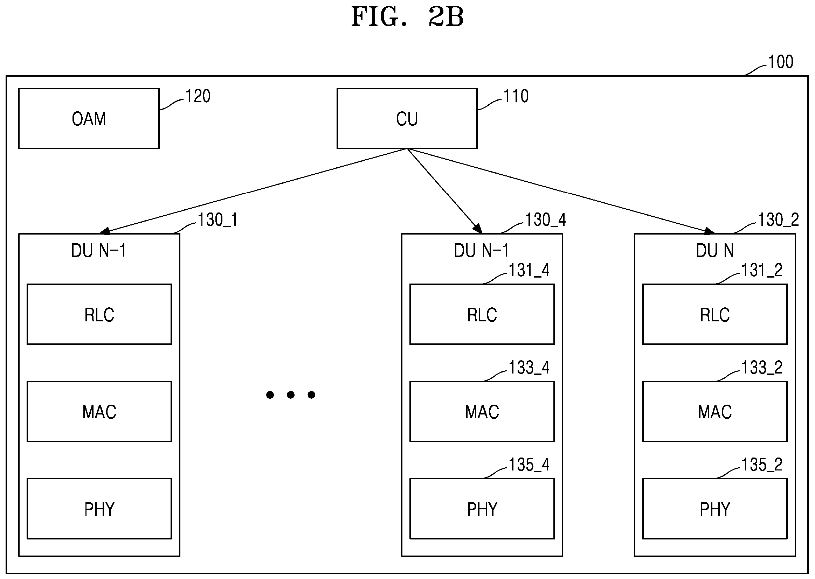

FIG. 2B is a block diagram illustrating a scale-in situation of a DU according to an embodiment.

Referring to FIG. 2B, in the v-RAN 100 according to an embodiment, the OAM 120 may receive information of each DU from the at least one DU 130_1, ..., 130_2 and may determine a scaling situation. For example, when the OAM 120 receives traffic information of the DU N 130_2 from the DU N 130_2 and determines that fewer resources are required in the DU N 130_2 than the reference resources, the OAM 120 may determine that a scale-in situation occurs, may identify (or determine) the DU N 130_2 as a source DU from which data is to be migrated, and may identify a DU N-1 130_4, which is a DU that processes relatively less traffic in a DU pool of the v-RAN 100, as a target DU to which the data is to be migrated.

In addition, some or all of the data of the DU N 130_2 may be migrated to the DU N-1 130_4.

When some or all of the data of the DU N 130_2 is migrated to the DU N-1 130_4, the data of the PHY 135_2, the MAC 133_2, and the RLC 131_2 of the DU N 130_2 may be respectively migrated to a PHY 135_4, an MAC 133_4, and an RLC 131_4 of the DU N-1 130_4, and the data migration may be sequentially performed.

According to an embodiment, the OAM 120 may change (or switch) an F1-U path for receiving data from the CU 110, from the DU N 130_2 to the DU N-1 130_4 in the scale-in operation.

According to an embodiment, when all data migration from the DU N 130_2 to the DU N-1 130_4 is completed, the DU N 130_2, which no longer processes data, may be deleted (or removed) under the control of the OAM 120. According to an embodiment, when the DU N 130_2 is deleted (or removed), the OAM 120 may determine that the scale-in operation is completed.

According to an embodiment of the present disclosure, an operation of "deleting a DU" may include an operation of, when the DU is a vDU, no longer allocating a memory or a processor allocated to the DU being deleted.

According to an embodiment, when both the path change and the data migration of the DU N 130_2 are completed, the OAM 120 may determine that the scale-out operation is completed (or terminated).

In the present disclosure, for convenience of description, an RLC migration method of a DU is described assuming that a scaling situation is a scale-out situation as shown in FIG. 2A, but is not limited thereto. For example, the RLC migration method of the DU described below may be equally applied even in a scale-in situation.

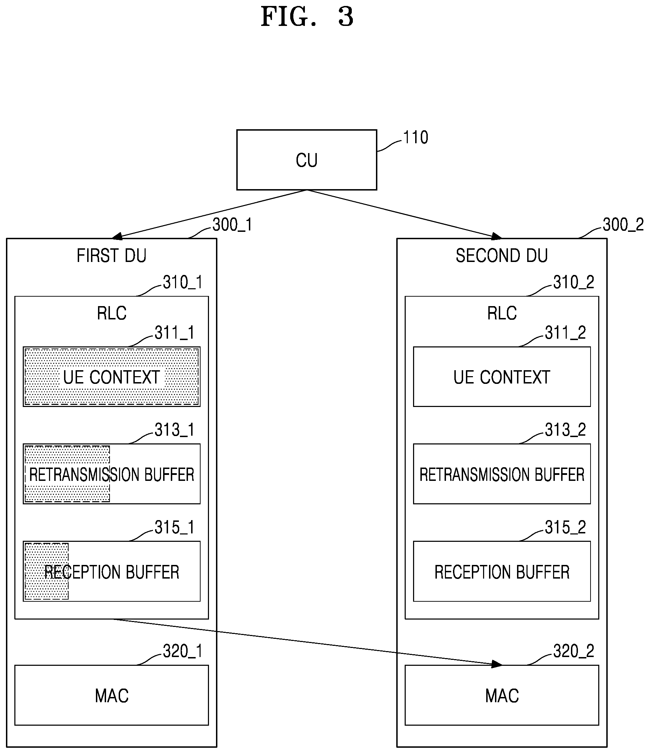

FIG. 3 illustrates RLC migration of a DU according to an embodiment.

Referring to FIG. 3, data to be migrated by an RLC 310_1 of a first DU 300_1 may include a UE context, data stored in a retransmission buffer (ReTX buffer) 313_1, and data stored in a reception buffer (Rx buffer) 315_1. According to an embodiment, the first DU 300_1 may be a source DU from which the data is to be migrated, and a second DU 300_2 may be a target DU to which the data is to be migrated from the first DU 300_1.

The ReTX buffer 313_1 of the first DU 300_1 according to an embodiment may temporarily store data that needs to be retransmitted. In data communication between a terminal and a base station, data loss or an error may occur in data, and the first DU 300_1 may transmit the data through retransmission of the lost data in which the data loss or the error has occurred. For example, data is stored in the ReTX buffer 313_1, and when a retransmission request is received from an MAC 320_1, the requested data may be delivered to the MAC 320_1.

The reception buffer 315 of the first DU 300_1 according to an embodiment may store uplink data obtained from the MAC 320_1.

Hereinafter, according to an embodiment of the present disclosure, it is assumed that DU migration is sequentially performed, and data migration from the MAC 320_1 of the first DU 300_1 to an MAC 320_2 of the second DU 300_2 is completed. For example, RLC migration is assumed.

According to an embodiment, when RLC migration is not performed, a downlink path through which downlink data is delivered is a path through which the downlink data is delivered from the CU 110 to the RLC 310_1 of the first DU 300_1. For example, the RLC 310_1 of the first DU 300_1 may process (or convert) the downlink data by using a stored UE context 311_1, and may deliver the processed (or converted) data the MAC 320_2 of the second DU 300_2 in which MAC migration is completed.

In the RLC migration, while the UE context 311_1 of the first DU 300_1, the data stored in the ReTX buffer 313_1, and the data stored in the Rx buffer 315_1 are migrated to a UE context 311_2, a retransmission (ReTX) buffer 313_2, and a reception buffer 315_2 of the second DU 300_2, uplink data transmission or downlink data transmission may be interrupted.

When the RLC migration is completed, the downlink data through the downlink data is delivered is a path through the downlink data is delivered from the CU 110 to an RLC 310_2 of the second DU 300_. For example, the RLC 310_2 of the second DU 300_2 may process (or convert) the downlink data by using the UE context 311_2 received and stored from the RLC 310_1 of the first DU, and may deliver the processed (or converted) data to the MAC 320_2 of the second DU 300_2 in which the MAC migration is completed.

The RLC migration method has a problem in that data transmission is interrupted while the RLC migration is performed, and a time during which the data transmission is interrupted may become longer according to a size of a buffer to be migrated.

Accordingly, the present disclosure proposes a method and an electronic device for performing RLC migration by forwarding data such that data transmission is not interrupted. The electronic device according to an embodiment may forward data such that data transmission is not stopped and may perform RLC migration.

In the present disclosure, the electronic device may include an entire or partial configuration of a v-RAN. For example, the electronic device may include an RLC migration module (e.g., a scaling agent module) that manages, controls, or processes (or converts) RLC migration. In an embodiment of the present disclosure, the electronic device for performing a method 200 may include a device of a source DU, a device of a target DU, or another separate device. For example, the source DU (or the device of the source DU) may include the RLC migration module. For example, the target DU (or the device of the target DU) may include the RLC migration module. For example, another device separate from the source DU and the target DU may include the RLC migration module.

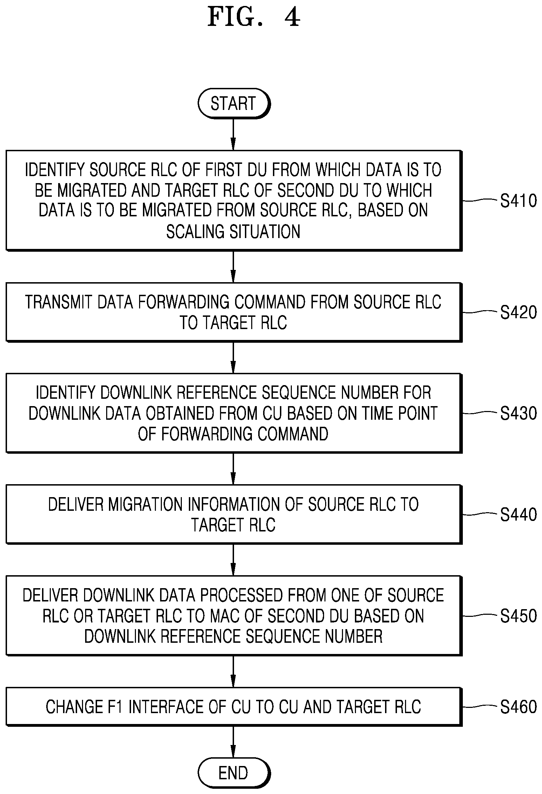

FIG. 4 is a flowchart illustrating a method of performing RLC migration of a DU according to an embodiment.

Referring to FIG. 4, a method 400 according to an embodiment of the present disclosure may include operations S410 to S460. In an embodiment of the present disclosure, operations S410 to S460 of the method 400 may be executed by an RLC migration module included in an electronic device. In an embodiment of the present disclosure, operations S410 to S460 of the method 400 may be executed by at least one processor included in the electronic device. The method 400 is not limited to that shown in FIG. 4, and in one or more embodiments, the method 400 may further include operations not shown in FIG. 4, or some operations may be omitted.

In operation S410, the electronic device may identify (or determine, designate, or select) a source RLC of a first DU from which data is to be migrated and a target RLC of a second DU to which the data is to be migrated from the source RLC, based on a scaling situation.

According to an embodiment, the scaling situation may be determined by the electronic device, or may be determined by another electronic device in the v-RAN or an electronic device outside the v-RAN 100 and delivered to the electronic device. For example, when the electronic device determines the scaling situation, the electronic device may receive information of a plurality of DUs from the plurality of DUs of the v-RAN 100 and may determine the scaling situation. For example, the information of the DU may include at least one of the amount of traffic processed (or converted) by the DU, CPU usage, and KPI.

In an embodiment, the scaling situation may include at least one of a scale-in situation and a scale-out situation. However, the present disclosure is not limited thereto. For example, the scaling situation may further include a case of performing migration-only in which only some data should be migrated in addition to the scale-in situation or the scale-out situation.

In addition, the electronic device according to an embodiment of the present disclosure may identify a migration user equipment (UE) of the source RLC, may deliver a migration UE context from the source RLC to the target RLC, and may configure a radio bearer of the target RLC.

For example, the electronic device may identify a UE being processed (or converted) by the source RLC, and may deliver the migration UE context from the source RLC to the target RLC such that the identified UE is processed (or converted) in the target RLC. According to an embodiment, the target RLC receiving the migration UE context may configure the radio bearer for processing (or converting) and delivering data.

In operation S420, the electronic device according to an embodiment of the present disclosure may transmit, to the source RLC, a data forwarding command from the source RLC to the target RLC.

For example, the electronic device may forward the data to the target RLC that is a migration target, and the target RLC receiving the forwarded data may process (or convert) the forwarded data and deliver the processed (or converted) data to an MAC. Here, the electronic device according to an embodiment may include an OAM, and the OAM may deliver a forwarding command to the source RLC.

In operation S430, the electronic device according to an embodiment may identify a downlink reference sequence number for downlink data obtained from a CU based on a time point of the forwarding command. Here, the electronic device according to an embodiment may include the source RLC.

In an embodiment, the electronic device may include a source DU, and the source DU may determine the reference sequence number for the downlink data obtained from the CU at a time point when the forwarding command delivered from the OAM is received. For example, when a sequence number of the downlink data was 85 at the time point when the forwarding command is received, the sequence number 85 may be identified (or determined, selected, or designated) as the downlink reference sequence number.

In operation S440, the electronic device according to an embodiment may deliver downlink data processed (or converted) from one of the source RLC or the target RLC to an MAC of the second DU based on the downlink reference sequence number.

For example, the electronic device may identify in which RLC the downlink data is to be processed (or converted) based on 85, which is the identified downlink reference sequence number. For example, when downlink data having sequence numbers 80 to 89 exists in the source RLC, the electronic device may identify that the downlink data of the sequence numbers 80 to 84 is processed (or converted) in the source RLC and the downlink data of the sequence numbers 85 to 89 is processed (or converted) in the target RLC. In this case, the source RLC may forward the downlink data of the sequence numbers 85 to 89 to the target RLC.

In an embodiment of the present disclosure, the source RLC may process (or convert) the downlink data of the sequence numbers 80 to 84 and deliver the processed (or converted) data to the MAC of the second DU, and the target RLC may process (or convert) the downlink data of the sequence numbers 85 to 89 and deliver the processed (converted) data to the MAC of the second DU.

In an embodiment of the present disclosure, the electronic device may update, based on the delivered downlink reference sequence number information, a first sequence number of data to be received from the CU of the target RLC after the time point of the forwarding command and a second sequence number, which is a smallest sequence number for which an acknowledgement (ACK) is not received from the UE. Also, according to an embodiment, the electronic device may configure (or set) a pollbit in first downlink data transmitted through at least one radio bearer of a target DU.

In operation S450, the electronic device according to an embodiment may deliver migration information of the source RLC to the target RLC.

According to an embodiment of the present disclosure, the migration information of the source RLC may include at least one of cell index information, UE identification (UE ID) information, radio bearer index information, and the downlink reference sequence number information.

In operation S460, the electronic device according to an embodiment may change an F1-U interface of the CU to the CU and the target RLC.

The F1-U interface of the CU before the RLC migration is performed is connected to the CU and an RLC of the source DU, but after the RLC migration is completed, the CU and an RLC of the target DU should be connected to transmit and receive data such that the RLC migration is completed. Accordingly, the electronic device may change (or update) the F1-U interface of the CU from the CU and the source RLC to the CU and the target RLC.

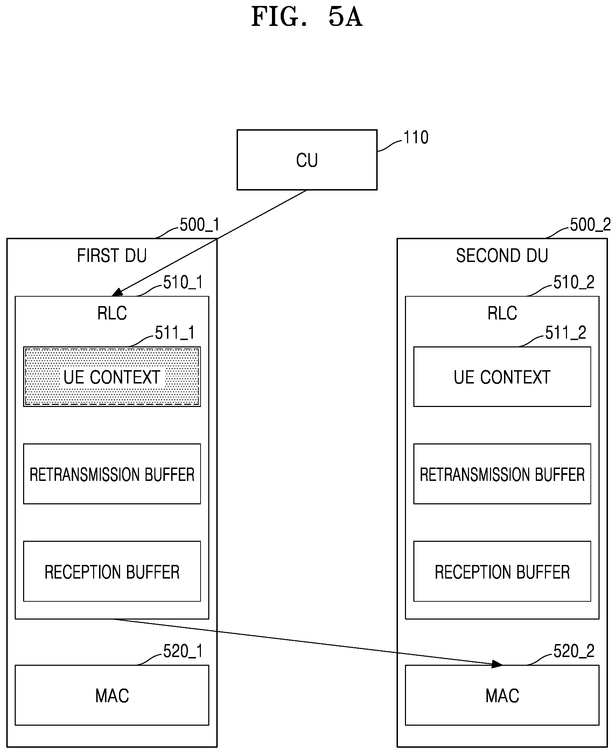

FIG. 5A is a block diagram illustrating a flow of transmitting downlink data before a UE context of an RLC is migrated according to an embodiment.

Referring to FIG. 5A, a UE context 511_1 of a first DU 500_1 has not been migrated, and an F1-U interface of the CU 110 is also connected to the first DU 500_1. Also, it is assumed that MAC migration from an MAC 520_1 of the first DU 500_1 to an MAC 520_2 of a second DU 500_2 is completed. In this case, a path through which downlink data is delivered from the CU 110 to the second DU 500_2 is a path through which the downlink data is delivered from the CU 110 to the first DU 500_1 and from the first DU 500_1 to the MAC 520_2 of the second DU 500_2.

According to an embodiment, in a process in which the downlink data is delivered, an RLC 510_1 of the first DU 500_1 may process (or convert) the downlink data by using the UE context 511_1 and may deliver the processed (or converted) downlink data to the MAC 520_2 of the second DU 500_2. For example, the downlink data may be an RLC service data unit (SDU), and the downlink data processed (or converted) by the RLC 510_1 of the first DU 500_1 may be an RLC protocol data unit (PDU).

An electronic device according to an embodiment of the present disclosure may identify a migration user equipment (UE) of a source RLC, may deliver a migration UE context from the source RLC to a target RLC, and may configure a radio bearer of the target RLC.

In an embodiment, all UEs connected to a cell that is migrated may be migration targets, and the UEs that are migrated may be migrated one by one without being migrated all at once. For example, assuming that UEs to be migrated are UE1, UE2, and UE3, a context of UE1 may be migrated first; after migration of the UE1 is completed, a context of UE2 may be migrated; and after migration of the UE2 is completed, a context of UE3 may be migrated and the UE3 may be migrated.

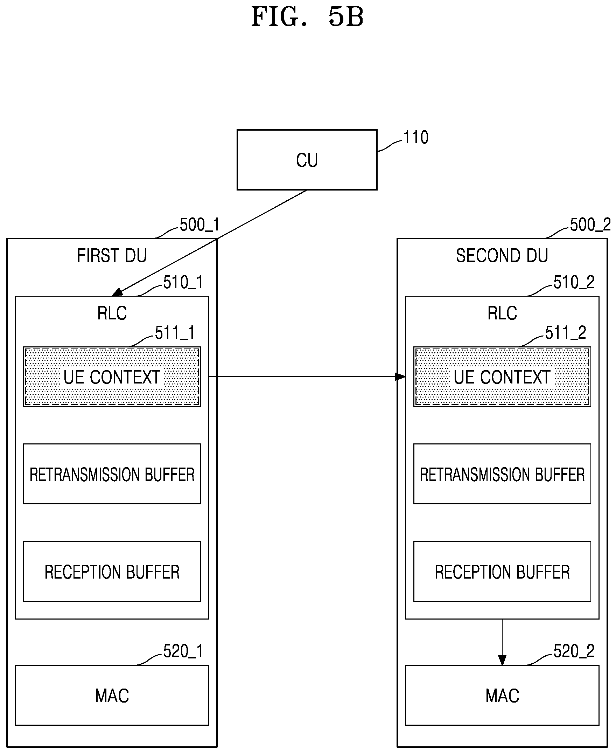

FIG. 5B illustrates a flow of transmitting downlink data after a UE context of an RLC is migrated according to an embodiment.

Referring to FIG. 5B, the electronic device according to an embodiment may migrate the UE context 511_1 of the first DU 500_1 to a UE context 511_2 of the second DU 500_2. Even after the UE context 511_1 of the first DU 500_1 is migrated to the UE context 511_2 of the second DU 500_2, downlink data is still delivered from the CU 110 to the RLC 510_1 of the first DU 500_1 because a downlink path of the CU 110 or the F1-U interface has not been changed.

According to an embodiment, when the electronic device delivers a data forwarding command to the first DU 500_1, the RLC 510_1 of the first DU 500_1 may identify a downlink reference sequence number based on a time pint of the forwarding command, and may identify (or determine, designate, or select) downlink data to be forwarded to an RLC 510_2 of the second DU 500_2 from among the downlink data delivered from the CU 110 to the RLC 510_1 of the first DU 500_1 according to the identified sequence number.

In this case, a downlink path according to an embodiment becomes a path through which the downlink data is delivered from the CU 110 to the RLC 510_1 of the first DU 500_1, from the RLC 510_1 of the first DU 500_1 to the RLC 510_2 of the second DU 500_2, and from the RLC 510_2 of the second DU 500_2 to an MAC 520 of the second DU 500_2. Also, according to an embodiment, downlink data that is not forwarded may be delivered to the MAC 520 of the second DU 500_2 along the path of FIG. 5A.

The electronic device according to an embodiment may change (or update) the F1-U interface of the CU 110 from between the CU 110 and the RLC 510_1 of the first DU 500_1 to between the CU 110 and the RLC 510_2 of the second DU 500_2.

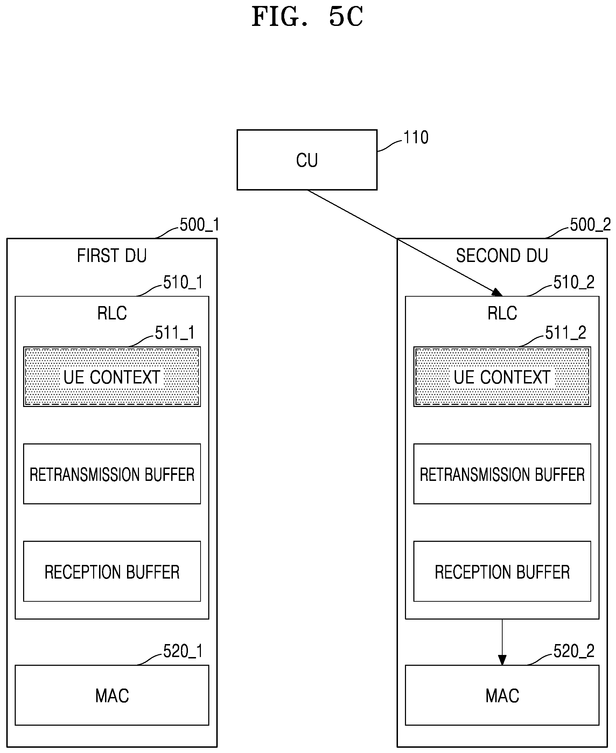

FIG. 5C illustrates a flow of transmitting downlink data after RLC migration is completed according to an embodiment.

Referring to FIG. 5C, according to an embodiment, when the F1-U interface of the CU 110 is changed and RLC migration is completed, downlink data is no longer processed (or converted) by the first DU 500_1.

In this case, a downlink path according to an embodiment is a path through which the downlink data is delivered from the CU 110 to the RLC 510_2 of the second DU 500_2, and from the RLC 510_2 of the second DU 500_2 to the MAC 520 of the second DU 500_2.

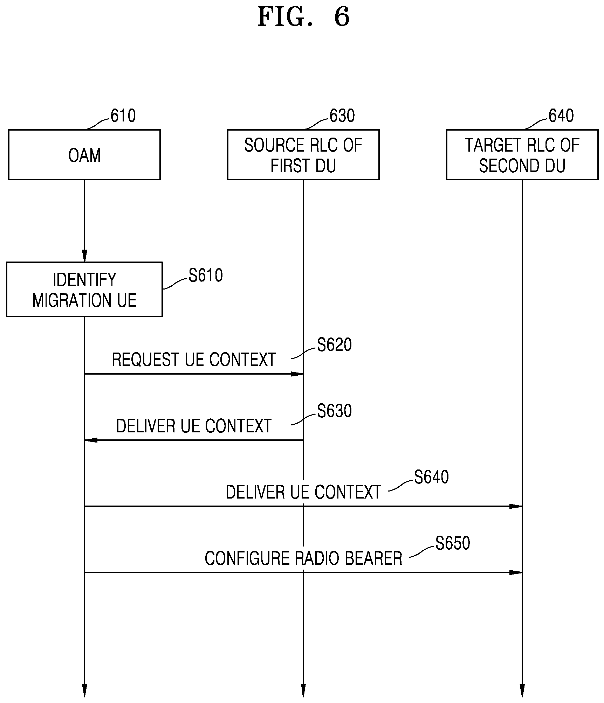

FIG. 6 illustrates a flow of delivering a UE context in a v-RAN according to an embodiment.

Referring to FIG. 6, in operation S610, according to an embodiment, an OAM 610 may identify (or determine, designate, or select) a UE for which data is to be migrated. For example, the UE for which data is to be migrated may be a UE being processed (or converted) by a source RLC 630 of a first DU from which data is migrated.

According to an embodiment, the OAM 610 may request the source RLC 630 of the first DU for a UE context for the identified migration UE (S630), may receive the requested UE context from the source RLC 630 of the first DU (S630), and may deliver the UE context to a target RLC 640 of a second DU (S640).

Also, the OAM 610 according to an embodiment may command the target RLC 640 of the second DU to configure a radio bearer (S650), and the target RLC 640 of the second DU may configure the radio bearer to initialize radio bearers of the UE.

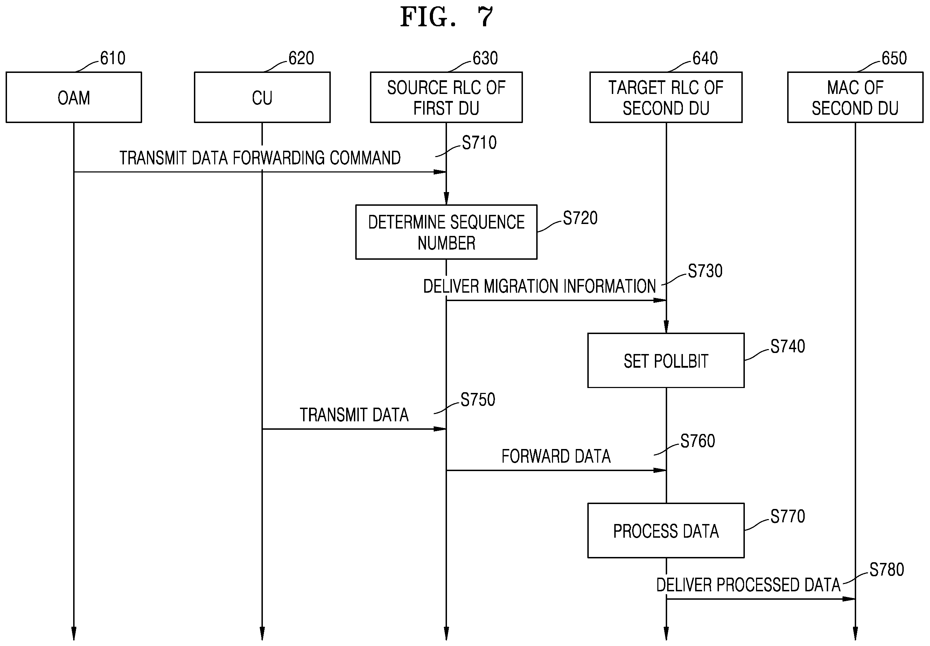

FIG. 7 illustrates a flow of forwarding RLC data between a source RLC and a target RLC and delivering data in a v-RAN according to an embodiment.

Referring to FIG. 7, according to an embodiment, in operation S710, the OAM 610 may command (or request) the source RLC 630 of the first DU to forward data. For example, operation S710 may be performed after operation S650 of FIG. 6.

In operation S720, the source RLC 630 of the first DU receiving a data forwarding command may determine a sequence number for downlink data at a time point when the data forwarding command is received as a downlink reference sequence number.

In the present disclosure, a variable indicating a sequence number is merely an example, and may be represented by a variable name having the same function or having the same meaning.

In an embodiment, a sequence number to be allocated to downlink data (e.g., a UMD PDU) newly generated at the time point when the forwarding command is received may be determined as the downlink reference sequence number.

For example, based on a TX_Next value, which is a sequence number to be allocated to newly generated downlink data, the source RLC 630 of the first DU may identify downlink data having a sequence number less than the TX_Next value as data to be processed (or converted) by the source RLC 630 of the first DU, and may identify downlink data having a sequence number greater than the TX_Next value as data to be processed (or converted) by the target RLC 640 of the second DU.

When the source RLC 630 of the first DU generates downlink data to be transmitted to an MAC, the TX_Next value according to an embodiment may include a sequence number used to generate the downlink data. In addition, a TX_Next_Ack value according to an embodiment may refer to a sequence number of downlink data having a smallest sequence number for which an acknowledgement (Ack) is not received from the UE. For example, the TX_Next_Ack value may refer to a sequence number value of next downlink data (e.g., an RLC SDU) to be sequentially received.

In an embodiment, the TX_Next value is a send state variable, and may be a value for allocating a sequence number for downlink data newly generated after downlink data generated so far (e.g., an AMD PDU). For example, the TX_Next value may be set to 0 as an initial value, and may be updated when the source RLC 630 of the first DU delivers downlink data whose sequence number becomes the TX_Next value. In an embodiment, TX_Next_Ack is an acknowledgement state variable, and may refer to a next downlink sequence number value for which an ACK is to be received in order. For example, the TX_Next_Ack value may be set to 0 as an initial value, and may be updated when the source RLC 630 of the first DU receives an ACK.

In the present disclosure, a sequence number to be allocated to newly generated downlink data is exemplarily referred to as TX_Next, but is not limited thereto. For example, a sequence number to be allocated to newly generated downlink data in LTE or 4G may be VT(S). In an embodiment, a VT(S) value may be set to 0 as an initial value, and may be updated when the source RLC 630 of 1 DU delivers downlink data whose sequence number becomes the VT(S) value. In the present disclosure, a sequence number of next downlink data to be sequentially received is exemplarily referred to as TX_Next_Ack, but is not limited thereto. For example, a sequence number of next downlink data to be sequentially received in LTE or 4G may be VT(A). In an embodiment, a VT(A) value may be set to 0 as an initial value, and may be updated when the source RLC 630 of the first DU receives an ACK.

In operation S730, according to an embodiment, the source RLC 630 of the first DU may deliver migration information to the target RLC 640 of the second DU.

For example, the migration information may include at least one of cell index information, user equipment identification (UE ID) information, radio bearer index information, and downlink reference sequence number information.

According to an embodiment, the target RLC 640 of the second DU may store the transmitted migration information, and may update a Tx_Next value and a Tx_Next_Ack value of the target RLC 640 of the second DU by using the obtained downlink reference sequence number.

In an embodiment, the target RLC 640 of the second DU may store the transmitted migration information, and may update a VT(A) value and a VT(S) value of the target RLC 640 of the second DU by using the obtained downlink reference sequence number.

In operation S740, according to an embodiment, the target RLC 640 of the second DU may set a pollbit for a radio bearer. Accordingly, an electronic device may quickly receive an acknowledgment (Ack or NACK) for a reception buffer of the source RLC 630 of the first DU, and may quickly release the reception buffer.

In an embodiment, the target RLC 640 of the second DU may transmit, to the UE, a reception status message request including an acknowledgement (ACK) or a negative acknowledgement (NACK) indicating that the downlink data has been completely received, and a method of requesting the reception status message may include a method of setting a pollbit.

In an embodiment, a pollbit may be set in downlink data transmitted through at least one radio bearer.

For example, the UE receiving the downlink data in which the pollbit is set may identify downlink data stored in a buffer of the UE, may generate an ACK or NACK indicating up to which sequence number the downlink data has been completely received and for which sequence the downlink data has not been received, and may deliver the ACK or NACK to the target RLC 640 of the second DU.

In an embodiment of the present disclosure, when a certain condition such as the number of PDU transmissions, a PDU transmission size, or the like, is satisfied, the target RLC 640 of the second DU may perform pollbit setting for downlink data, and when a condition such as a certain timer or the like is satisfied, the UE may transmit a reception status message for the downlink data in which the pollbit is set.

In an embodiment, even when the condition is not satisfied, the target RLC 640 of the second DU may perform pollbit setting for downlink data, and the UE may transmit a reception status message for the downlink data in which the pollbit is set.

Accordingly, in RLC migration of a DU according to an embodiment, because a quick acknowledgement may be received from the UE, various effects including an effect of performing the RLC migration of the DU without interruption in communication of the UE may be achieved.

In operation S750, when downlink data is transmitted from a CU 620 to the source RLC 630 of the first DU, according to an embodiment, the source RLC 630 of the first DU may forward the downlink data to the target RLC 640 of the second DU (S760), and the target RLC of the second DU may process (or convert) the forwarded data (S770) and may deliver the processed (or converted) data to an MAC 650 of the second DU (S780).

For example, the data forwarded to the target RLC 640 of the second DU may be an RLC SDU, and the data processed (or converted) by the target RLC 640 of the second DU may be an RLC PDU.

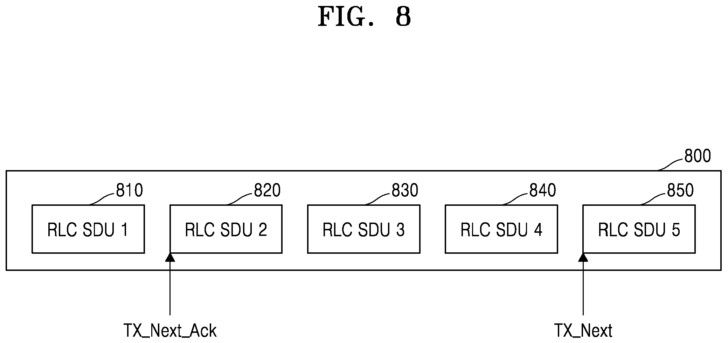

FIG. 8 illustrates downlink data stored in a source RLC according to an embodiment.

Referring to FIG. 8, according to an embodiment, FIG. 8 illustrates a plurality of RLC SDUs 810, 820, 830, 840, and 850, which are downlink data stored in a reception buffer 800 included in the source RLC 630 of the first DU, when the source RLC 630 of the first DU receives a data forwarding command from the OAM 610.

For example, the RLC SDU1 810 has a sequence number of 81 and has received an acknowledgement (response) from a UE, the RLC SDU2 820 has a sequence number of 82 and has not received an acknowledgement from the UE, the RLC SDU3 830 has a sequence number of 83 and has received an acknowledgement from the UE, the RLC SDU4 840 has a sequence number of 84 and has not received an acknowledgement from the UE, and the RLC SDU5 850 has a sequence number of 85 and may be downlink data not obtained from the CU 620.

For example, a downlink reference sequence number may be 85, which is a TX_Next or VT(S) value, and the RLC SDU 1 810, the RLC SDU 2 820, the RLC SDU 3 830, and the RLC SDU 4 840 each having a sequence number less than the TX_Next or VT(S) value may be processed (or converted) and retransmission may be managed in the source RLC 630 of the first DU. In addition, according to an embodiment, the RLC SDU 5 850 having a sequence number greater than the TX_Next or VT(S) value may be processed (or converted) and retransmission may be managed in the target RLC 640 of the second DU.

Here, a TX_Next_Ack and VT(A) values may refer to a sequence number of downlink data having a smallest sequence number for which an acknowledgement has not been received from the UE. For example, the TX_Next_Ack and/or VT(A) value may be used to manage downlink data retransmitted to the UE.

When the source RLC 630 of the first DU receives an acknowledgement from the UE, and TX_Next_Ack or VT(A) is updated such that TX_Next_Ack=Tx_Next or VT(S)=VT(A), that is, when downlink data to be processed (or converted) for retransmission no longer exists in the reception buffer 800, the source RLC 630 of the first DU may release the reception buffer.

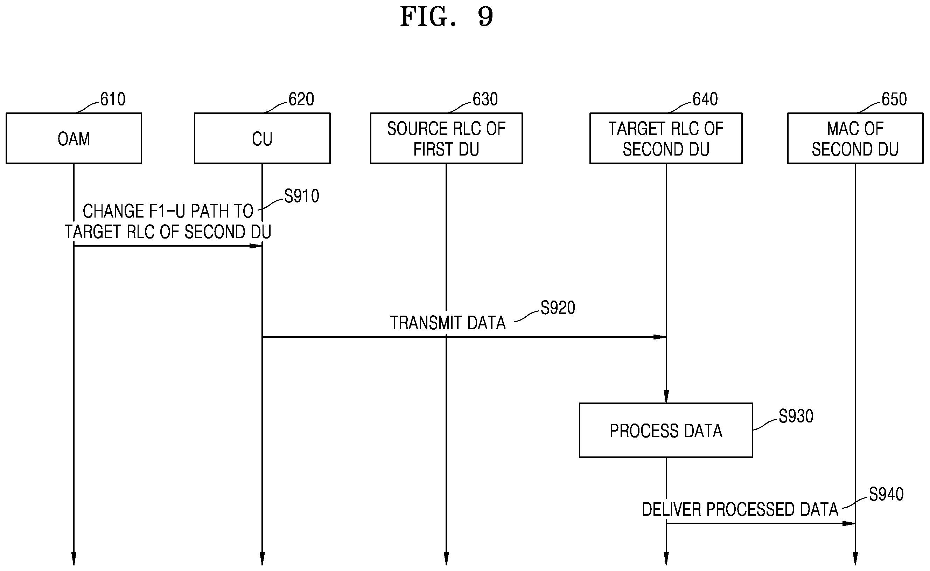

FIG. 9 illustrates a flow of changing an F1-U path of a CU in a v-RAN according to an embodiment.

Referring to FIG. 9, in operation S910, the OAM 610 according to an embodiment may command the CU 620 to change (or update) an F1-U path to a target RLC of a second DU. For example, operation S910 may be performed after operation S740 of FIG. 7.

When the F1-U path of the CU 620 is changed in operation S910, according to an embodiment, the CU 620 may transmit downlink data to the target RLC 640 of the second DU (S920), and the target RLC 640 of the second DU may process (or convert) the transmitted downlink data (S930), and may deliver the processed (or converted) data to the MAC 650 of the second DU (S940).

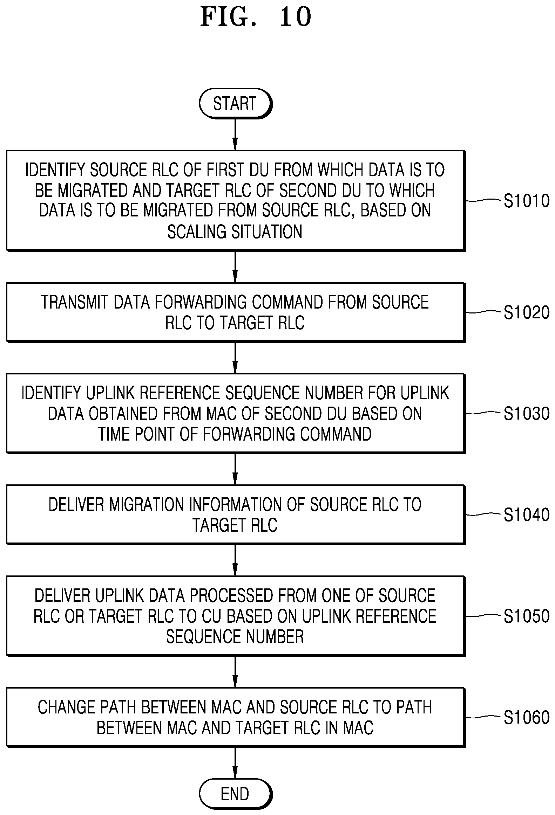

FIG. 10 illustrates a method of performing RLC migration of a DU for uplink data in a v-RAN according to an embodiment.

FIG. 10 illustrates a method by which an electronic device identifies an uplink reference sequence number and processes (or converts) uplink data according to RLC migration according to the uplink reference sequence number.

Referring to FIG. 10, an operating method of the electronic device according to an embodiment may include operations S1010 to S1060. In an embodiment of the present disclosure, operations S1010 to S1060 may be executed by at least one processor included in the electronic device. The operating method of the electronic device is not limited to that illustrated in FIG. 10, and in one or more embodiments, operations not illustrated in FIG. 10 may be further included, or some operations may be omitted.

Also, in an embodiment, the electronic device may command to perform an operation of each component by controlling operations of an OAM, a CU, a source RLC of a first DU, a target RLC of a second DU, and an MAC of the second DU.

In operation S1010, according to an embodiment of the present disclosure, the electronic device may identify a source RLC of a first DU from which data is to be migrated and a target RLC of a second DU to which the data is to be migrated from the source RLC, based on a scaling situation.

According to an embodiment, the scaling situation may be determined by the electronic device, or may be determined by another electronic device in the v-RAN or an electronic device outside the v-RAN 100 and delivered to the electronic device. For example, when the electronic device determines the scaling situation, the electronic device may receive information of a plurality of DUs from the plurality of DUs of the v-RAN 100 and may determine the scaling situation. For example, the information of the DU may include at least one of the amount of traffic processed (or converted) by the DU, CPU usage, and KPI.

In an embodiment, the scaling situation may include at least one of a scale-in situation and a scale-out situation. However, the present disclosure is not limited thereto. For example, the scaling situation may further include a case of performing migration-only in which only some data should be migrated in addition to the scale-in situation or the scale-out situation.

In addition, the electronic device according to an embodiment of the present disclosure may identify a migration user equipment (UE) of the source RLC, may deliver a migration UE context from the source RLC to the target RLC, and may configure a radio bearer of the target RLC.

For example, the electronic device may identify a UE being processed (or converted) by the source RLC, and may deliver the migration UE context from the source RLC to the target RLC such that the identified UE is handled in the target RLC. According to an embodiment, the target RLC receiving the migration UE context may configure the radio bearer for processing (or converting) and delivering data.

In operation S1020, the electronic device according to an embodiment of the present disclosure may transmit, to the source RLC, a data forwarding command from the source RLC to the target RLC.

For example, the electronic device may forward data to the target RLC that is a migration target, and the target RLC receiving the forwarded data may process (or convert) the received data and deliver the processed data to an MAC. Here, the electronic device according to an embodiment may include an OAM, and the OAM may deliver the forwarding command to the source RLC.

In operation S1030, the electronic device according to an embodiment of the present disclosure may identify an uplink reference sequence number for uplink data obtained from the MAC of the second DU, based on a time point of the forwarding command.

In an embodiment, the uplink reference sequence number may indicate a sequence number of uplink data for which a timer has not expired and which has not been completely received among uplink data of the source RLC 630 of the first DU. For example, the uplink reference sequence number may be a sequence number of uplink data for which a timer has not expired and which has not been completely received among the uplink data of the source RLC at the time point of the forwarding command, and may be an RX_Highest_Status value.

Here, the timer according to an embodiment may indicate t-Reamssembly timer.

In an embodiment, RX_Highest_Status may indicate the uplink data for which the timer has not expired and which has not been completely received among the uplink data of the source RLC 630 of the first DU. In an embodiment, the sequence number of the uplink data for which the timer has not expired and which has not been completely received among the uplink data may be VR (MS).

In an embodiment, a sequence number after last completely received uplink data (e.g., an AMD PDU) may be denoted by RX_Next. For example, an RX_Next value may indicate a receive state variable, and the RX_Next value may indicate a sequence number after a last completely received RLC SDU in a sequence. For example, the RX_Next value may be set to 0 as an initial value, and may be increased by 1 and updated whenever the source RLC 630 of the first DU receives uplink data whose sequence number becomes the RX_Next value.

Also, the sequence number after the last completely received uplink data (e.g., the AMD PDU) may be denoted by VR(R).

In an embodiment, the source RLC 630 of the first DU may identify a fourth sequence number, which is a sequence number of uplink data for which the timer has expired and which has not been completely delivered among the uplink data of the source RLC 630 of the first DU and a fifth sequence number, which is a largest sequence number among the uplink data of the source RLC 630. For example, the fourth sequence number may be the RX_Next or VR(R) value, and the fifth sequence number may be an RX_Next_Highest or VR(H) value.

In an embodiment, the electronic device may transmit an ACK message or a NACK message for the uplink data based on a third sequence number, the fourth sequence number, and the fifth sequence number.

For example, based on the third sequence number which is the uplink reference sequence number, the electronic device may transmit the ACK message to the MAC for the uplink data from the fourth sequence number to the fifth sequence number, which is data to be processed (or converted) by the source RLC 630 of the first DU, to quickly release content of a reception buffer.

In an embodiment, the uplink data in the reception buffer of the source RLC to be migrated from the source RLC to the target RLC may be uplink data whose sequence number is greater than RX_Highest_Status or VR(MS), which is the uplink reference sequence number and less than RX_Next_Highest or VR(H). These uplink data may be delivered to the target RLC in the same format as the uplink data delivered from the MAC. Accordingly, because the source RLC according to the present disclosure transmits a part of the uplink data in the reception buffer to the target RLC and does not need to transmit all of the uplink data stored in the buffer, various effects including an effect of shortening an RLC migration time and reducing a buffer size may be obtained.

In addition, in an embodiment, the electronic device may update the RX_Next or VT(S) value to the RX_Highest_Status or VR(MS) value before generating the ACK message or the NACK message and may ignore a retransmission request for unreceived uplink data before the uplink reference sequence number.

Because uplink data for which the NACK message less than RX_Hishgest_Status or VR (MS) should be transmitted is uplink data for which a normal transmission time has elapsed, when the NACK message is transmitted, the RLC migration time may increase for retransmission processing (or conversion). In an embodiment of the present disclosure, the source RLC may ignore uplink data less than RX_Hishgest_Status or VR (MS). In addition, in an embodiment, the ignored uplink data may be recovered according to a retransmission mechanism in a higher layer.

In an embodiment of the present disclosure, the electronic device may cause the source RLC to deliver, to the target RLC, uplink data transmitted from the MAC and having a sequence number greater than the uplink reference sequence number.

In operation S1040, the electronic device according to an embodiment of the present disclosure may deliver migration information of the source RLC to the target RLC.

In an embodiment, the migration information of the source RLC may include at least one of cell index information, user equipment identification (UE ID) information, radio bearer index information, and the downlink reference sequence number information.

In operation S1050, the electronic device according to an embodiment of the present disclosure may deliver (or transmit or send) uplink data processed (or converted) from either the source RLC or the target RLC to the CU based on the uplink reference sequence number.

In an embodiment, when receiving a data forwarding request, which is the uplink reference sequence number, the electronic device may identify (or determine, select, or designate) uplink data having a sequence number greater than or equal to the uplink reference sequence number based on the RX_Highest_Status or VR (MS) value as being processed (or converted) in the target RLC, and may identify (or determine, select, or designate) uplink data having a sequence number less than the uplink reference sequence number as being processed (or converted) in the source RLC. In an embodiment, the uplink data processed (or converted) from each of the source RLC or the target RLC may be delivered (or transmitted or sent) to the CU.

In operation S1060, the electronic device according to an embodiment of the present disclosure may change a path between the MAC and the source RLC to a path between the MAC and the target RLC in the MAC.

For example, the electronic device may change an MAC-RLC path used for RLC PDU transmission in the MAC from the source RLC to the target RLC and may complete the migration of the uplink data.

In this case, because the uplink data is not received by the source RLC, resources required for uplink data processing (or conversion) may be released.

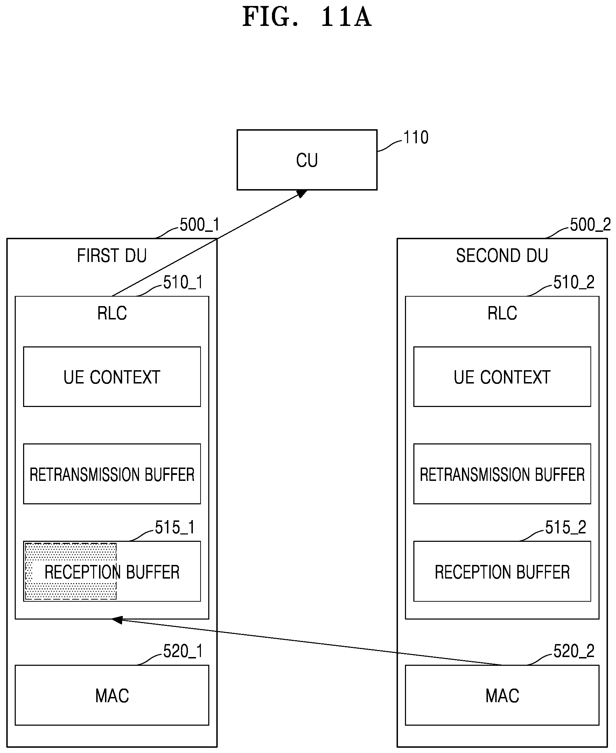

FIG. 11A is a block diagram illustrating a flow of transmitting uplink data before RLC migration according to an embodiment.

Referring to FIG. 11A, according to an embodiment, before RLC migration from an RLC 510_1 of a first DU 500_1 to an RLC 510_2 of a second DU 500_2, MAC migration from an MAC 520_1 of the first DU 500_1 to an MAC 520_2 of the second DU 500_2 may be completed. Hereinafter, it is assumed that RLC migration is performed after MAC migration is completed.

In an embodiment, before the RLC migration, the MAC 520_2 of the second DU 500_2 may deliver uplink data of a UE to the RLC 510_2 of the first DU 500_1, and the RLC 510_2 of the first DU 500_1 may store and process (or convert) the delivered uplink data in a reception buffer 513_1 and deliver the processed (or converted) uplink data to the CU 110.

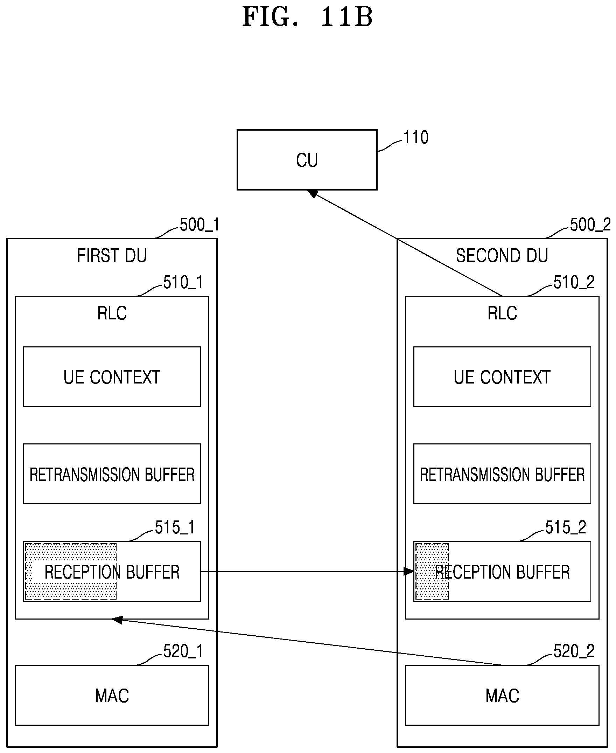

FIG. 11B illustrates a flow of transmitting uplink data when RLC migration is performed according to an embodiment.

Referring to FIG. 11B, according to an embodiment, the RLC 510_1 of the first DU 500_1 may receive an uplink data forwarding command from an OAM and may identify (or determine, designate, or select) an uplink reference sequence number. In an embodiment, the RLC 510_1 of the first DU 500_1 may identify (or determine, designate, or select) uplink data to be processed (or converted) by the RLC 510_1 of the first DU 500_1 or the RLC 510_2 of the second DU 500_2 based on the identified uplink reference sequence number.

According to an embodiment, the uplink data may indicate an RLC SDU, and the uplink data processed (or converted) by each of the RLC 510_1 of the first DU 500_1 and the RLC 510_2 of the second DU 500_2 and delivered to the CU may be an RLC PDU.

According to an embodiment, the RLC 510_1 of the first DU 500_1 receiving the uplink data from the MAC 520_2 of the second DU 500_2 may store the received uplink data in the reception buffer 515_1 in the form of an RLC SDU, and may forward the stored uplink data to the RLC 510_2 of the second DU 500_2. For example, in the RLC 510_1 of the first DU 500_1, uplink data in a reception buffer of a source RLC to be migrated from the source RLC to a target RLC may be uplink data having a sequence number greater than RX_Highest_Status or VR(MS), which is the uplink reference sequence number, and less than RX_Next_Highest or VR(H). Such uplink data may be delivered to the target RLC in the same format as the uplink data delivered from the MAC. Accordingly, because the source RLC according to the present disclosure transmits only a part of the uplink data in the reception buffer to the target RLC and does not need to transmit all of the uplink data stored in the buffer, various effects including an effect of shortening an RLC migration time and reducing a buffer size may be obtained.

In an embodiment, the RLC 510_2 of the second DU 500_2 may store the uplink data received from the reception buffer 515_1 of the first DU 500_1 in the form of an RLC SDU in a reception buffer 515_2 of the second DU 500_2 and may process (or convert) the stored RLC SDU into an RLC PDU. Also, according to an embodiment, the RLC 510_2 of the second DU 500_2 may deliver (or transmit or send) the processed RLC PDU to the CU 110.

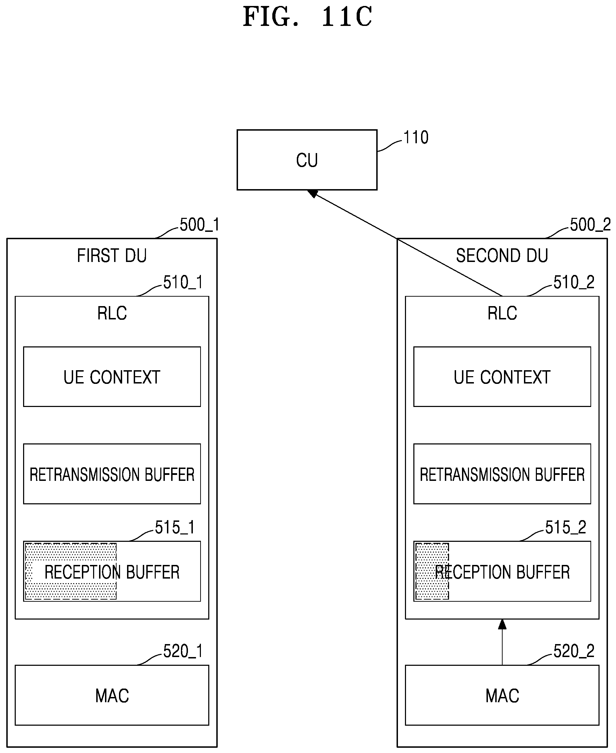

FIG. 11C illustrates a flow of transmitting uplink data after RLC migration is completed according to an embodiment.

Referring to FIG. 11C, according to an embodiment, when RLC migration is completed, an MAC-DU path may be changed, and thus, the MAC 520_2 of the second DU 500_2 may directly deliver (or transmit or send) uplink data to the RLC 510_2 of the second DU 500_2.

In an embodiment, the RLC 510_2 of the second DU 500_2 may store the received uplink data in the reception buffer 515_2 for an acknowledgement, may process the uplink data for which delivery is completed, and may deliver (or transmit or send) the processed uplink data to the CU 110.

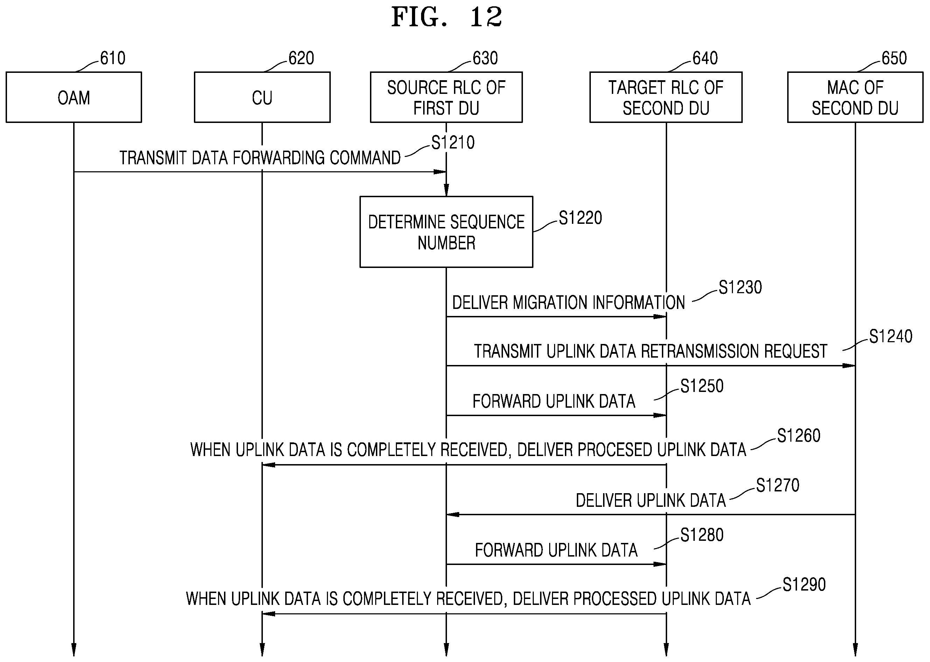

FIG. 12 illustrates a flow of transmitting uplink data during RLC migration according to an embodiment.

Referring to FIG. 12, in operation S1210, the OAM 610 according to an embodiment may command (or request) the source RLC 630 of the first DU to forward data. For example, operation S1210 may be performed after operation S650 of FIG. 6.

In operation S720, the source RLC 630 of the first DU receiving a data forwarding command may determine a sequence number for uplink data at a time point when the data forwarding command is received as a downlink reference sequence number.

In an embodiment, RX_Highest_Status or VR (MS) may indicate uplink data for which a timer has not expired and which has not been completely received among uplink data of the source RLC 630 of the first DU.

In an embodiment, an RX_Next or VR(R) value may indicate a receive state variable, and the RX_Next or VR(R) value may indicate a sequence number after a last completely received RLC SDU in a sequence. For example, the RX_Next or VR(R) value may be set to 0 as an initial value, and may be increased by 1 and updated whenever the source RLC 630 of the first DU receives uplink data whose sequence number becomes the RX_Next or VR(R) value.

In an embodiment, the source RLC 630 of the first DU may identify a fourth sequence number, which is a sequence number of uplink data for which the timer has expired and which has not been completely received among the uplink data of the source RLC 630 of the first DU and a fifth sequence number, which is a largest sequence number among the uplink data of the source RLC 630. For example, the fourth sequence number may be the RX_Next or VR(R) value, and the fifth sequence number may be an RX_Next_Highest or VR(H) value.

In an embodiment, the source RLC 630 of the first DU may transmit an ACK message or a NACK message for the uplink data, based on a third sequence number, the fourth sequence number, and the fifth sequence number.

For example, based on the third sequence number, which is an uplink reference sequence number, the source RLC 630 of the first DU may transmit the ACK message to an MAC for the uplink data from the fourth sequence number to the fifth sequence number, which is data to be processed (or converted) by the source RLC 630 of the first DU, to quickly release content of a reception buffer.

In operation S1230, the source RLC 630 of the first DU according to an embodiment may deliver migration information to the target RLC 640 of the second DU.

For example, the migration information may include at least one of cell index information, user equipment identification (UE ID) information, radio bearer index information, and downlink reference sequence number information.

In operation S1230, the source RLC 630 of the first DU according to an embodiment may deliver (or transmit or send) a retransmission request message including the ACK or the NACK for the stored uplink data to the MAC 650 of the second DU. For example, the retransmission message may be an STATUS PDU.

In operation S1250, based on the sequence number determined in operation S1220, the source RLC 630 of the first DU may identify (or determine, select, or designate) the uplink data to be processed by the source RLC 630 of the first DU and the target RLC 640 of the second DU, and may forward the uplink data to be processed by the target RLC 640 of the second DU.

In operation S1260, when the uplink data is completely received based on the forwarded uplink data, the target RLC 640 of the second DU according to an embodiment may process the corresponding uplink data and deliver (or transmit or send) the processed uplink data to the CU 620.

For example, the forwarded uplink data may be an RLC PDU, and the uplink data processed by the target RLC 640 of the second DU may be an RLC SDU. The RLC PDU is in a form in which an RLC header is combined with the RLC SDU, and the target RLC 640 of the second DU according to an embodiment may transmit, to the CU, the RLC SDU obtained by removing the RLC header from the PLC PDU obtained from the MAC.

Also, in an embodiment, when the forwarded uplink data is not completely received, the target RLC 640 of the second DU may store the corresponding data in a reception buffer of the target RLC 640 of the second DU.

In operation S1270, the MAC 650 of the second DU according to an embodiment of the present disclosure may deliver (or transmit or send) the uplink data requested by the source RLC 630 of the first DU to the source RLC 630 of the first DU. In operation S1280, the source RLC 630 of the first DU according to an embodiment may deliver the uplink data received from the MAC 650 of the second DU to the target RLC 640 of the second DU.

In operation S1290, when the uplink data is completely received based on the uplink data forwarded in operation S1280, the target RLC 640 of the second DU according to an embodiment may process the corresponding uplink data and deliver (or transmit or send) the processed uplink data to the CU 620.

Also, in an embodiment, when the forwarded uplink data is not completely received, the target RLC 640 of the second DU may store the corresponding data in the reception buffer of the target RLC 640 of the second DU.

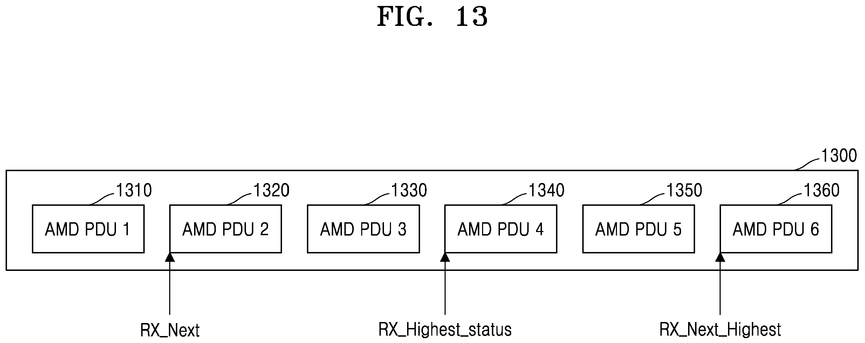

FIG. 13 illustrates uplink data stored in a buffer of a source RLC according to an embodiment.

Referring to FIG. 13, in an embodiment, a plurality of AMD PDUs 1310, 1320, 1330, 1340, 1350, and 1360 may be stored in a buffer 1300 of a source RLC.

Here, each AMD PDU may be uplink data received from an MAC.

In an embodiment, at a time point when the source RLC receives a data forwarding command from an OAM, the source RLC may identify (or determine, designate, or select) an RX_Highest_Status or VR(MS) value as an uplink reference sequence number.

In an embodiment of the present disclosure, RX_Highest_Status or VR (MS) may indicate uplink data for which a timer has not expired and which has not been completely received among uplink data of the source RLC.

In an embodiment, the source RLC may identify an RX_Next or VR(R) value and an RX_Next_Highest or VR(H) value. For example, the RX_Next or VR(R) value may refer to a fourth sequence number of uplink data for which the timer has expired and which has not been completely received among the uplink data of the source RLC, and the RX_Next_Highest or VR(H) value may be a fifth sequence number which is a largest sequence number among the uplink data of the source RLC. The Rx_Highest_Status or VR(MS), RX_Next or VR(R) and RX_Next_Highest or VR(H) values may be updated according to retransmitted data or the timer.

For example, it is assumed that a sequence number of the AMD PDU 1 1310 is 83 and all uplink data has been received; a sequence number of the AMD PDU 2 1320 is 84 and only some uplink data has been received; a sequence number of the AMD PDU 3 1330 is 85 and all uplink data has been received; a sequence number of the AMD PDU 4 1340 is 86 and only some uplink data has been received; a sequence number of the AMD PDU 5 1350 is 87 and only some uplink data has been received; and a sequence number of the AMD PDU 6 1360 is 88 and uplink data has not yet been received.

In this case, the RX_Next or VR(R) value may be 84, which is a sequence number of uplink data for which the timer has expired and which has not been completely received among the uplink data of the source RLC, the RX_Highest_Status or VR(MS) value may be 86, and the RX_Next_Highest or VR(H) value may be 87.

In an embodiment of the present disclosure, the source RLC may determine that all uplink data has been received for the AMD PDU 1 1310, which is uplink data having a sequence number less than the RX_Next or VR(R) value. In addition, according to an embodiment, the source RLC may identify the AMD PDU 2 1320 and the AMD PDU 3 1330 as uplink data to be processed by the source RLC, and may transmit a retransmission request for the AMD PDU 2 1320 and the AMD PDU 3 1330 because the timer has expired. In an embodiment, the AMD PDU 4 1320 and the AMD PDU 5 1330 are uplink data for which the timer has not expired, and thus, a retransmission request may not be required, and the AMD PDU 4 1320 and the AMD PDU 5 1330 may be identified as data to be processed by a target RLC. Accordingly, the source RLC may forward the AMD PDU 4 1320 and the AMD PDU 5 1330 to the target RLC.

In an embodiment of the present disclosure, the AMD PDU 6 1360 having a sequence number greater than the RX_Next_Highest or VR(H) value may be identified as uplink data that has not yet been obtained from the MAC.

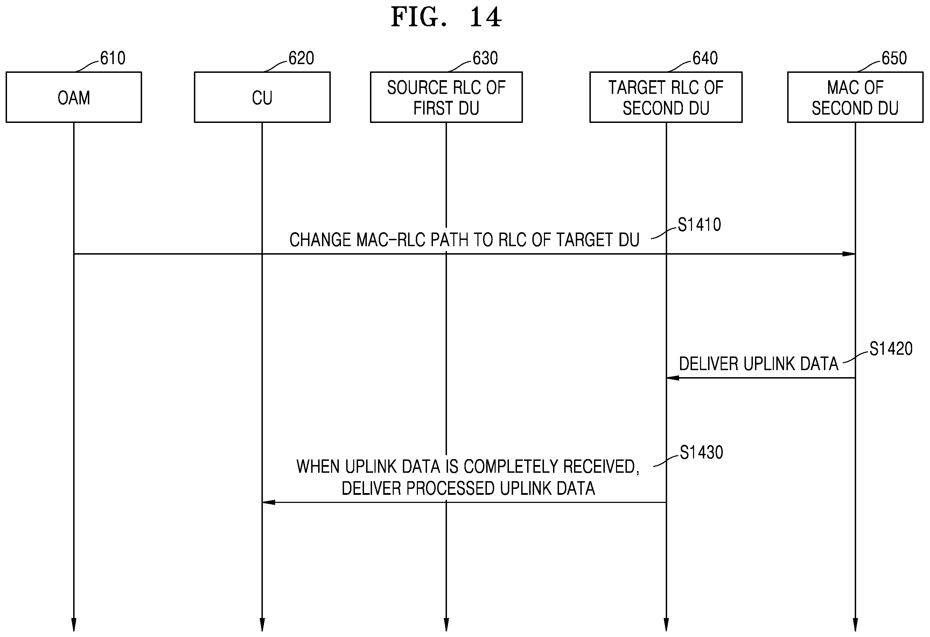

FIG. 14 illustrates a flow of changing an MAC-RLC path and delivering uplink data according to an embodiment.

Referring to FIG. 14, in operation S1410, the OAM 610 may command (or request) the MAC 650 of the target DU to change an MAC-RLC path from the RLC 630 of the source DU to the RLC 640 of the target DU, and the MAC 650 of the target DU may change the MAC-RLC path from the RLC 630 of the source DU to the RLC 640 of the target DU.

In operation S1420, the MAC 650 of the target DU according to an embodiment may deliver uplink data to the RLC 640 of the target DU by using the changed path.

In operation S1430, the RLC 640 of the target DU according to an embodiment may identify whether the uplink data has been completely received, and when the uplink data has been completely received, the RLC 640 of the target DU may process the uplink data and deliver the processed uplink data to the CU 620. For example, when the uplink data has not been completely received, the RLC 640 of the target DU may store the uplink data delivered in operation S1420, and may expect to receive additional uplink data.

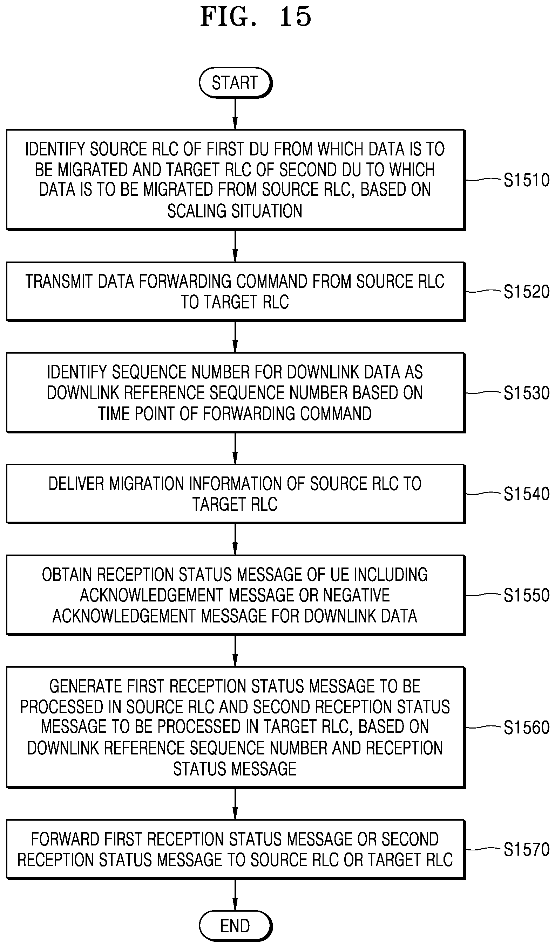

FIG. 15 is a flowchart illustrating a method of delivering a reception status message of a UE to a source RLC or a target RLC according to an embodiment.

Referring to FIG. 15, an operating method of an electronic device according to an embodiment may include operations S1510 to S1570. In an embodiment of the present disclosure, operations S1510 to S1570 may be executed by at least one processor included in the electronic device. The operating method of the electronic device is not limited to that illustrated in FIG. 15, and in one or more embodiments, operations not illustrated in FIG. 15 may be further included, or some operations may be omitted.

Also, in an embodiment, the electronic device may command to perform an operation of each component by controlling operations of an OAM, a CU, a source RLC of a first DU, a target RLC of a second DU, and an MAC of the second DU.

In operation S1510, the electronic device according to an embodiment may identify a source RLC of a first DU from which data is to be migrated and a target RLC of a second DU to which the data is to be migrated from the source RLC, based on a scaling situation.

According to an embodiment, the scaling situation may be determined by the electronic device, or may be determined by another electronic device in the v-RAN or an electronic device outside the v-RAN 100 and delivered to the electronic device. For example, when the electronic device determines the scaling situation, the electronic device may receive information of a plurality of DUs from the plurality of DUs of the v-RAN 100 and may determine the scaling situation. For example, the information of the DU may include at least one of the amount of traffic processed (or converted) by the DU, CPU usage, and KPI.

In an embodiment, the scaling situation may include at least one of a scale-in situation and a scale-out situation. However, the present disclosure is not limited thereto. For example, the scaling situation may further include a case of performing migration-only in which only some data should be migrated in addition to the scale-in situation or the scale-out situation.

In addition, the electronic device according to an embodiment of the present disclosure may identify a migration user equipment (UE) of the source RLC, may deliver a migration UE context from the source RLC to the target RLC, and may configure a radio bearer of the target RLC.

For example, the electronic device may identify a UE being processed (or converted) by the source RLC, and may deliver the migration UE context from the source RLC to the target RLC such that the identified UE is handled in the target RLC. According to an embodiment, the target RLC receiving the migration UE context may configure the radio bearer for processing (or converting) and delivering data.

In an embodiment, operation S1510 may be performed after operation S640 or operation S650 of FIG. 6.

In operation S1520, the electronic device according to an embodiment may transmit a data forwarding command from the source RLC to the target RLC.

For example, the electronic device may forward data to the target RLC that is a migration target, and the target RLC receiving the forwarded data may process (or convert) the received data and deliver the processed data to an MAC. Here, the electronic device according to an embodiment may include an OAM, and the OAM may deliver the forwarding command to the source RLC.

In operation S1530, the electronic device according to an embodiment may identify a sequence number of downlink data as a downlink reference sequence number based on a time point of the forwarding command.

For example, based on a TX_Next or VT(S) value, which is a sequence number, the source RLC of the first DU may identify downlink data having a sequence number less than the TX_Next or VT(S) value as data to be processed (or converted) by the source RLC of the first DU, and may identify downlink data having a sequence number greater than the TX_Next or VT(S) value as data to be processed (or converted) by the target RLC of the second DU.

The TX_Next or VT(S) value according to an embodiment may include a sequence number used for downlink data generation when the source RLC of the first DU generates downlink data to be transmitted to the MAC. In addition, a TX_Next_Ack or VT(A) value according to an embodiment may refer to a sequence number of downlink data having a smallest sequence number for which an acknowledgement (Ack) has not been received from the UE.

In an embodiment, the TX_Next or VT(S) value is a send state variable, and may be a value for assigning a sequence number for downlink data to be newly generated after downlink data generated so far (e.g., an AMD PDU). For example, the TX_Next or VT(S) value may be set to 0 as an initial value, and may be updated when the source RLC 630 of the first DU delivers downlink data whose sequence number becomes the TX_Next or VT(S) value.

In an embodiment, TX_Next_Ack or VT(A) is an acknowledgement state variable, and may refer to a next downlink sequence number value for which an ACK is to be received in order. For example, the TX_Next_Ack or VT(A) value may be set to 0 as an initial value, and may be updated when the source RLC 630 of the first DU receives an ACK.

In operation S1540, the electronic device according to an embodiment may deliver migration information of the source RLC to the target RLC.

For example, the migration information may include at least one of cell index information, user equipment identification (UE ID) information, radio bearer index information, and downlink reference sequence number information.

In operation S1550, the electronic device, according to an embodiment may obtain a reception status message including an acknowledgement message or a negative acknowledgement message for downlink data.

The electronic device according to an embodiment may obtain the reception status message of the UE from the MAC of the target DU. For example, a reception status of the UE may be a STATUS PDU.

In operation S1560, the electronic device according to an embodiment may generate a first reception status message to be processed by the source RLC or a second reception status message to be processed by the target RLC, based on the downlink reference sequence number and the reception status message.

Downlink data transmitted from the CU to the source DU or the target DU and from the source DU or the target DU to the UE is stored in a reception buffer of the UE, and it is not known whether the reception status message for the generated downlink data is to be processed in the source RLC or the target RLC. The electronic device according to an embodiment may consider all such cases.

For example, when the electronic device receives the reception status message of the UE during RLC migration, the electronic device may divide ACK or NACK information in the reception status message into information to be processed by the source RLC and information to be processed by the target RLC, and may generate the first reception status message and the second reception status message, which are new reception status messages, based on each information.

In operation S1570, the electronic device according to an embodiment may forward the first reception status message or the second reception status message to the source RLC or the target RLC.

In an embodiment, when an MAC-RLC path has not yet been changed to the target RLC, the electronic device may control the source RLC which generated the first reception status message and the second reception status message to process the first reception status message and forward the second reception status message to the target RLC.

In an embodiment, when the MAC-RLC path has been changed to the target RLC, the electronic device may control the target RLC which generated the first reception status message and the second reception status message to forward the first reception status message to the source RLC and process the second reception status message in the target RLC.

In an embodiment of the present disclosure, when there is no more data for retransmission in a reception buffer of the source RLC, the electronic device may request the target RLC to stop forwarding the reception status message, and when the target RLC receives a forwarding stop request from the source RLC, the target RLC may recognize that the RLC migration is terminated.

For example, in order to determine whether there is retransmission data in the reception buffer in the source RLC, the electronic device may determine that there is no retransmission data when the TX_Next or VT(S) and the TX_Next_Ack or VT(A) value are the same.

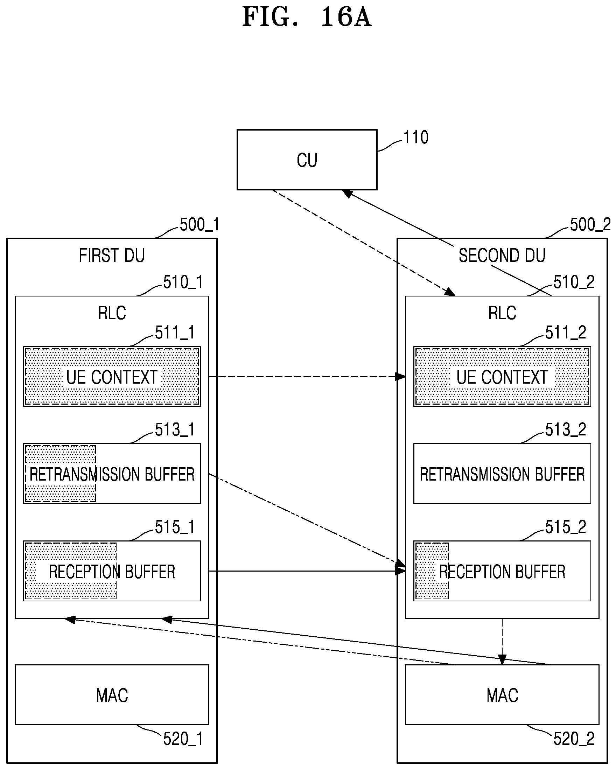

FIG. 16A is a block diagram illustrating a path for processing a reception status message before an RLC-MAC path is changed according to an embodiment.

FIG. 16A exemplarily illustrates a flow of data in a case where data of the UE context 511_1 and the reception buffer 515_1 of the first DU 500_1 is migrated to the UE context 511_2 and the reception buffer 515_2 of the second DU 500_2, but an MAC-DU path of the MAC 520_2 of the second DU 500_2 has not been changed to the second DU 500_2 which is a target DU.

In FIG. 16A, a solid line indicates an uplink data path, a dashed line indicates a downlink data path, and a dash-double dotted line indicates a reception status message path.

Referring to FIG. 16A, a downlink data path according to an embodiment is a case in which an F1-U path of the CU 110 is changed to the RLC 510_2 of the second DU 500_2, and may be directed from the CU 110 to the RLC 510_2 of the second DU 500_2 and from the RLC 510_2 of the second DU 500_2 to the MAC 520_2 of the second DU 500_2. In this case, the UE context 511_1 of the first DU 500_2 may be migrated in the order of identified UEs to the UE context 511_2 of the second DU 500_2.

An uplink data path according to an embodiment may be directed from the MAC 520_2 of the second DU 500_2 to the RLC 510_1 of the first DU 500_1, uplink data to be processed in the RLC 510_2 of the second DU 500_2 may be forwarded from the RLC 510_1 of the first DU 500_1 to the RLC 510_2 of the second DU 500_2, and processed uplink data may be delivered to the CU 110.

A path of a reception status message of a UE according to an embodiment may be directed from the MAC 520_2 of the second DU 500_2 to the RLC 510_1 of the first DU 500_1, and a first reception status message and a second reception status message may be generated based on the reception status message in the RLC 510_1 of the first DU 500_1, and the second reception status message may be delivered to the RLC 510_2 of the second DU 500_2. Accordingly, data of an ReTX buffer 513_1 of the first DU 500_1 may not be delivered to an ReTX buffer 513_2 of the second DU 500_2.

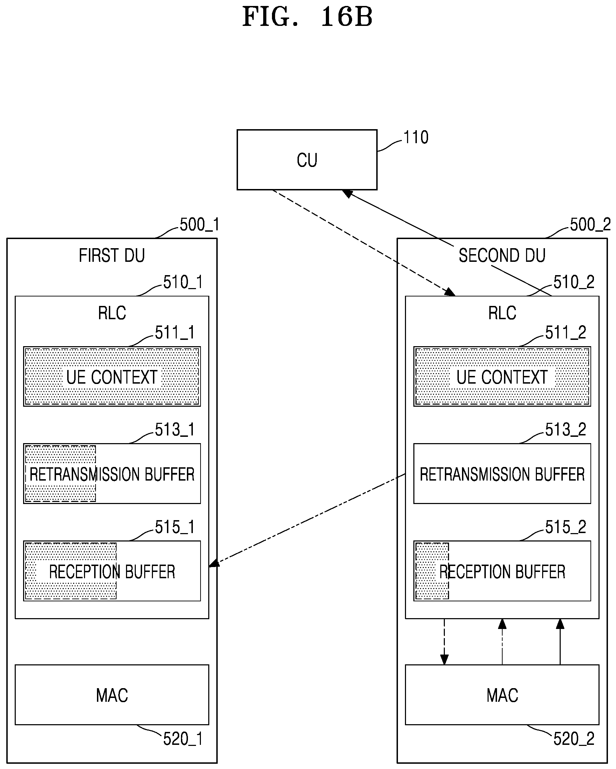

FIG. 16B is a block diagram illustrating a path for delivering a reception status message after an RLC-MAC path is changed according to an embodiment.

Referring to FIG. 16B, because both an F1-U path and an RLC-MAC path have been changed to the RLC 510_2 of the second DU 500_2, an uplink data path and a downlink data path may exist between the CU 110, the RLC 510_2 of the second DU 500_2, and the MAC 520_2 of the second DU 500_2.

In an embodiment, even after all RLC-MAC paths are changed to the RLC 510_2 of the second DU 500_2, a reception status message of a UE may need to be processed in the RLC 510_1 of the first DU 500_1. Accordingly, the RLC 510_2 of the second DU 500_2 according to an embodiment may obtain the reception status message of the UE from the MAC 520_2 of the second DU 500_2, and may generate a first reception status message to be processed in the RLC 510_1 of the first DU 500_1 and a second reception status message to be processed in the RLC 510_2 of the second DU 500_2. Also, the RLC 510_2 of the second DU 500_2 may forward the generated first reception status message to the RLC 510_1 of the first DU 500_1.

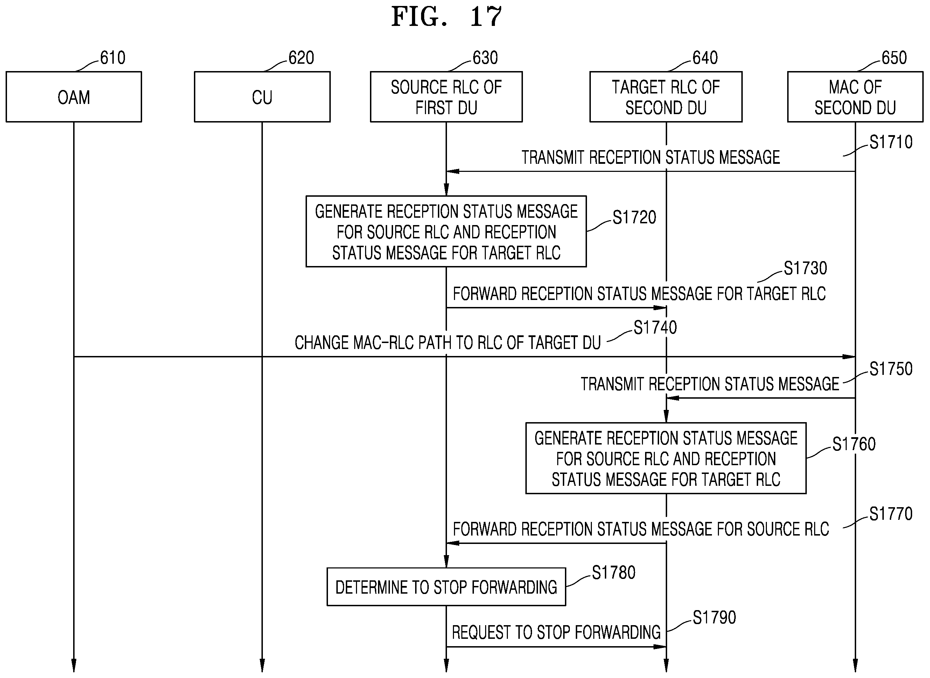

FIG. 17 illustrates a flow of RLC migration and delivery of a reception status message according to an embodiment.

Referring to FIG. 17, operation S1710 may be performed after operation S640 or operation S650 of FIG. 6, or may be performed after operations S1210 to S1230 of FIG. 12.

Hereinafter, it is assumed that operations S1210 to S1230 of FIG. 12 have been performed.

In operation S1710, the MAC 650 of the second DU according to an embodiment may transmit a reception status message of a UE for downlink data. For example, the reception status message of the UE may include an acknowledgement (ACK) message or a negative acknowledgement (NACK) message.

In operation S1720, the source RLC 630 of the first DU may generate a first reception status message to be processed in the source RLC 630 of the first DU or a second reception status message to be processed in the target RLC 640 of the second DU based on a downlink reference sequence number, by using the received reception status message of the UE.

For example, the source RLC 630 of the first DU may identify (or determine or decide) that downlink data corresponding to a reception status message having a sequence number less than the downlink reference sequence number is to be processed in the source RLC 630 of the first DU, and may generate the first reception status message for the corresponding downlink data.

For example, the source RLC 630 of the first DU may identify (or determine or decide) that downlink data corresponding to a reception status message having a sequence number greater than or equal to the downlink reference sequence number is to be processed in the target RLC 640 of the second DU, and may generate the second reception status message for the corresponding downlink data.

In operation S1730, the source RLC 630 of the first DU according to an embodiment may forward the second reception status message, which is a reception status message for the target RLC, to the target RLC 640 of the second DU.

In operation S1740, the OAM 610 according to an embodiment may request the MAC 650 of the second DU to change an MAC-RLC path from the source RLC 630 of the first DU to the target RLC 640 of the second DU, and the MAC 650 of the second DU may change the MAC-RLC path from the source RLC 630 of the first DU to the target RLC 640 of the second DU.

In operation S1750, the MAC 650 of the second DU according to an embodiment may deliver the reception status message of the UE to the target RLC 640 of the second DU according to the changed MAC-RLC path.

In operation S1770, the MAC 650 of the second DU may generate a first reception status message to be processed in the source RLC 630 of the first DU or a second reception status message to be processed in the target RLC 640 of the second DU based on the downlink reference sequence number, by using the received reception status message of the UE.

For example, the target RLC 630 of the second DU may identify (or determine or decided) that downlink data corresponding to a reception status message having a sequence number less than the downlink reference sequence number is to be processed in the source RLC 630 of the first DU, and may generate the first reception status message for the corresponding downlink data.

For example, the source RLC 630 of the second DU may identify (or determine or decide) that downlink data corresponding to a reception status message having a sequence number greater than or equal to the downlink reference sequence number is to be processed in the target RLC 640 of the second DU, and may generate the second reception status message for the corresponding downlink data.

In operation S1770, the target RLC 640 of the second DU according to an embodiment may forward the first reception status message to be processed in the source RLC 630 of the first DU. When the first reception status message is forwarded, the source RLC 630 of the first DU may perform retransmission of downlink data by using the first reception status message.

Also, in an embodiment, the target RLC 640 of the second DU may perform retransmission of downlink data by using the second reception status message.

In operation S1780, the source RLC 630 of the first DU according to an embodiment may determine whether to stop forwarding the reception status message. For example, when there is no more data for retransmission in a reception buffer of the source RLC 630 of the first DU, the source RLC 630 of the first DU may request the target RLC 640 of the second DU to stop forwarding the reception status message, and when the target RLC 640 of the second DU receives a forwarding stop request from the source RLC 630 of the first DU, the target RLC 640 of the second DU may recognize the request as completion (or termination) of the RLC migration.

For example, in order to determine whether there is no retransmission data in the reception buffer in the source RLC 630 of the first DU, an electronic device may determine that there is no retransmission data when a TX_Next or VT(S) value is the same as a TX_Next_Ack or VT(A) value.

In operation S1790, the source RLC 630 of the first DU may request the target RLC 640 of the second DU to stop forwarding the reception status message.

For example, when receiving the rewarding stop request for the reception status message, the target RLC 640 of the second DU may determine that the entire RLC migration is completed (or terminated) and may stop forwarding the reception status message.

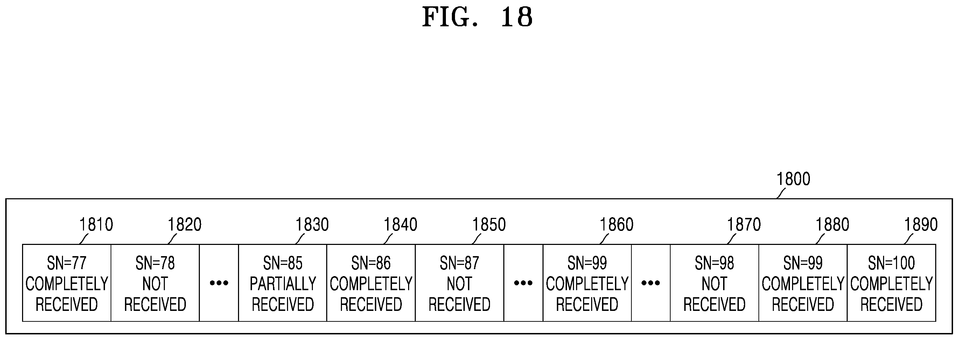

FIG. 18 illustrates downlink data stored in a UE according to an embodiment.

Referring to FIG. 18, in an embodiment, downlink data stored in a reception buffer 1800 of a UE may include downlink data having sequence numbers 77 to 100, first downlink data 1810, fourth downlink data 1840, sixth downlink data 1860, eighth downlink data 1880, and ninth downlink data 1890 are completely received, and second downlink data 1820, third downlink data 1830, fifth downlink data 1850, and seventh downlink data 1870 are partially received or not received and thus may require retransmission.

In an embodiment, based on the downlink data stored in the reception buffer 1800, the UE may generate a reception status message and may deliver the reception status message to an MAC of a target DU.

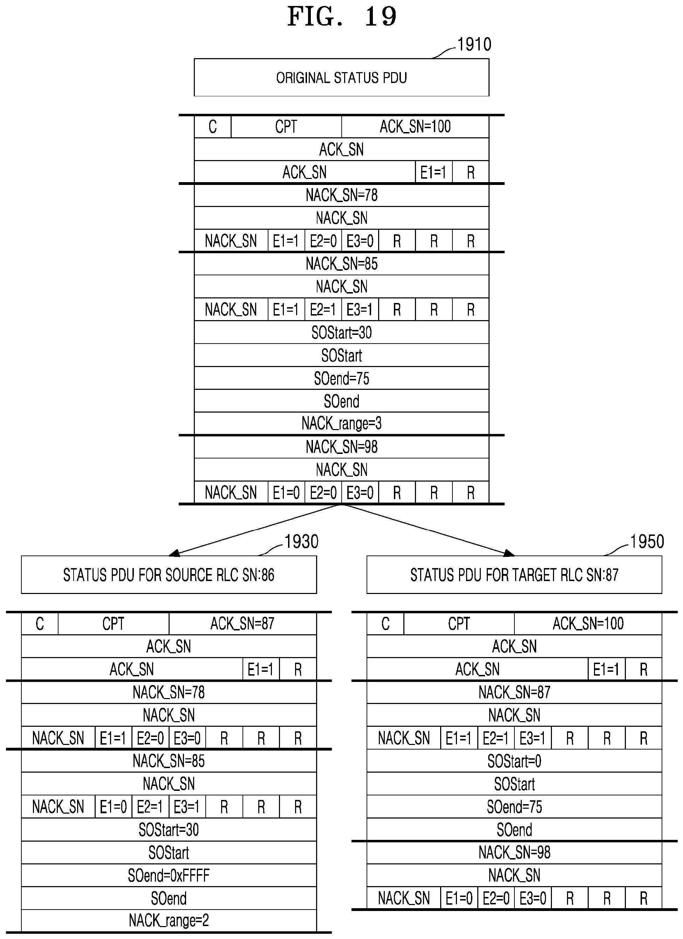

FIG. 19 illustrates reception status messages to be processed by a source RLC and a target RLC, generated by dividing a reception status message according to an embodiment.

Referring to FIG. 19, a reception status message 1910 of a UE delivered from an MAC according to an embodiment may include information about downlink data requiring retransmission of FIG. 18. For example, because NACK_SN=78 and NACK_range=3, from NACK_SN=85 to NACK_SN=87, and NACK_SN=98, the reception status message 1910 of the UE may include retransmission request information for the second downlink data 1820, the third downlink data 1830, the fifth downlink data 1850, and the seventh downlink data 1870 of FIG. 18.

For example, when a target RLC or a source RLC identifies a downlink reference sequence number as 87, data to be processed in the source RLC may be downlink data having sequence numbers 78, 85, and 86, and the target RLC or the source RLC may generate a first reception status message 1930 to be processed in the source RLC. In addition, when the target RLC or the source RLC identifies the downlink reference sequence number as 87, data to be processed in the target RLC may be downlink data having sequence numbers 87 and 98, and the target RLC or the source RLC may generate a second reception status message 1950 to be processed in the source RLC.

The above-described operation of the electronic device may be applied not only to a case of scaling a DU, but also to a case where only an RLC is migrated without MAC migration.

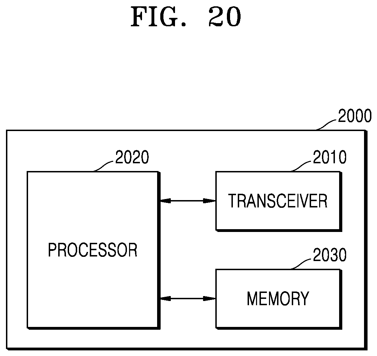

FIG. 20 is a block diagram illustrating an electronic device according to an embodiment.

An electronic device 2000 shown in FIG. 20 may be an electronic device that performs a migration operation for a DU. For example, an electronic device 1100 may be a server device. For example, the electronic device 2000 may be a communication device constituting a RAN. The electronic device 2000 may be a network device or a server device that constitutes an existing RAN, such as a network device or a server device that performs an RU function, a network device or a server device that performs a DU function, a network device or a server device that performs a CU function, or a network device or a server device that performs an OAM function. The electronic device 2000 may be a separate network device or a server device (e.g., a scale agent device) that controls cell migration.

In an embodiment of the present disclosure, the electronic device 2000 may include, but is not limited to, a transceiver 2010, at least one processor 2020, and memory 2030. The processor 2020 may be electrically connected to components included in the electronic device 2000, and may execute operations or data processing related to control and/or communication of the components included in the electronic device 2000. In an embodiment of the present disclosure, the processor 2020 may load and process a request, an instruction, or data received from at least one of other components in the memory, and may store processing result data in the memory. According to various embodiments, the processor 2020 may include at least one of a general-purpose processor such as a central processing unit (CPU), an application processor (AP), or a digital signal processor (DSP), a graphics-dedicated processor such as a graphics processing unit (GPU) or a vision processing unit (VPU), or an artificial intelligence-dedicated processor such as a neural processing unit (NPU). In an embodiment, the processor 2020 may include at least one processing circuitry, such as a system-on-chip (SoC) or an integrated circuit (IC).

The transceiver 2010 may support establishment of a wired or wireless communication channel between the electronic device 2000 and another external electronic device and communication through the established communication channel.

According to an embodiment, the transceiver 2010 may receive data or a data processing request from another electronic device or a client, or may transmit generated data.

According to various embodiments, the transceiver 2010 may include a wireless communication module (e.g., a cellular communication module, a short-range wireless communication module, or a global navigation satellite system (GNSS) communication module) or a wired communication module (e.g., a local area network (LAN) communication module or a power line communication module), and may communicate with an external electronic device through a short-range communication network (e.g., Bluetooth, WiFi direct, or infrared data association (IrDA)) or a long-range communication network (e.g., a cellular network, the Internet, or a computer network (e.g., LAN or WAN)) by using a corresponding communication module among them.

The processor 2020 may control to process input data according to a predefined operation rule, algorithm, method, or model stored in the memory 2030. The processor 2020 may control to process input data based on data stored in the memory 2030. The processor 2020 may perform an operation of a predefined operation rule, algorithm, method, or model stored in the memory 2030 by using input data.

The memory 2030 may be electrically connected to the processor 2020 and may store one or more modules, algorithms, operation rules, models, programs, instructions, or data related to operations of components included in the electronic device 2000. For example, the memory 2030 may store one or more modules, algorithms, operation rules, models, programs, instructions, or data for processing and control by the processor 2020. The memory 2030 may include at least one type of storage medium among, but not limited to, a flash memory type, a hard disk type, a multimedium card micro type, a card type memory (e.g., an SD or XD memory), a random-access memory (RAM), a static random-access memory (SRAM), a read-only memory (ROM), an electrically erasable programmable ROM (EEPROM), a programmable ROM (PROM), a magnetic memory, a magnetic disk, and an optical disk.

In an embodiment, the memory 2030 may store data or information identified, obtained, generated, or determined by the electronic device 2000. The memory 2030 may store data and information identified, obtained, generated, or determined by the electronic device 2000 in a compressed form. In an embodiment, the memory 2030 may include one or more storage media storing one or more instructions executable by the processor 2020. The one or more instructions, when executed individually or collectively by the processor 2020, may cause the electronic device 1000 to perform at least some of operations described with reference to FIGS. 1 to 19.

Some modules performing at least one operation of the electronic device 2000 may be implemented as a hardware module, a software module, and/or a combination thereof. The memory 2030 may include software modules that perform at least some of the operations of the electronic device 2000 described above. In an embodiment of the present disclosure, a module included in the memory 2030 may perform an operation by being executed by the processor 2020. For example, a module (i.e., a software module) included in the memory 2030 may include a program, a model, or an algorithm that is executed under the control or command of the processor 2020 and is configured to perform operations of deriving output data for input data. Some modules performing at least one operation of the electronic device 2000 may include a plurality of sub-modules or may constitute one module.

The electronic device 2000 may include more components than the components illustrated in FIG. 20. In an embodiment of the present disclosure, the electronic device 2000 may further include a communication interface (or a communication module) for communication with an external device. In an embodiment of the present disclosure, the electronic device 2000 may further include an input/output device and/or an input/output interface.

In the present disclosure, redundant descriptions with reference to FIGS. 1 to 20 may be omitted, and one or more embodiments described above may be applied/implemented in combination with each other. In the present disclosure, an operation described as being performed by a module may be executed/performed by an electronic device including or storing the module, or may be executed/performed under the control of at least one processor of the electronic device including the module. An operation described as being performed by an electronic device may be executed/performed by a module included in or stored in the electronic device, or may be performed under the control of at least one processor of the electronic device by using the module included in or stored in the electronic device.

Although the embodiments have been described by the limited embodiments and the drawings as described above, various modifications and variations may be made by one of ordinary skill in the art from the above description. For example, the described techniques may be performed in a different order from the described method, and/or the described components such as a computer system and a module may be combined or integrated in a different form from the described method, or may be replaced or substituted by other components or equivalents to achieve appropriate results.

In an embodiment of the present disclosure, a method of performing radio link control (RLC) migration of a radio network system may include, based on a scaling situation, identifying a source RLC of a first distributed unit (DU) from which data is to be migrated and a target RLC of a second DU to which the data is to be migrated from the source RLC. In an embodiment of the present disclosure, the method may include transmitting, to the source RLC, a data forwarding command from the source RLC to the target RLC. In an embodiment of the present disclosure, the method may include, based on a time point of the forwarding command, identifying a downlink reference sequence number for downlink data obtained from a centralized unit (CU). In an embodiment of the present disclosure, the method may include delivering migration information of the source RLC to the target RLC. In an embodiment of the present disclosure, the method may include, based on the downlink reference sequence number, delivering the downlink data processed from one of the source RLC or the target RLC to a medium access control (MAC) of the second DU. In an embodiment of the present disclosure, the method may include changing an F1-U interface of the CU to the CU and the target RLC.

In an embodiment of the present disclosure, the scaling situation may include at least one of a scale-in situation or a scale-out situation.

In an embodiment of the present disclosure, the method may include: identifying a UE to be migrated from the source RLC; delivering a context of the UE from the source RLC to the target RLC; and configuring a radio bearer of the target RLC.

In an embodiment of the present disclosure, the migration information may include at least one of cell index information, user equipment identification (UE ID) information, radio bearer index information, or information of the downlink reference sequence number.

In an embodiment of the present disclosure, the method may further include: based on the delivered downlink reference sequence number information, updating a first sequence number for downlink data to be newly generated in the target RLC and a second sequence number which is a smallest sequence number for downlink data for which an acknowledgement (ACK) has not been received from a terminal; and setting a pollbit in at least one radio bearer of the second DU.

According to an embodiment of the present disclosure, the delivering of the downlink data processed from one of the source RLC and the target RLC to the MAC of the second DU may include, when the downlink data is downlink data having a sequence number greater than or equal to the downlink reference sequence number, forwarding the downlink data from the source RLC to the target RLC, delivering the downlink data processed from the target RLC to the MAC of the second DU, and when the downlink data is downlink data having a sequence number less than the downlink reference sequence number, delivering the downlink data processed from the source RLC to the MAC of the second DU.

According to an embodiment of the present disclosure, the method may further include: based on the time point of the forwarding command, identifying an uplink reference sequence number for uplink data obtained from the MAC of the second DU; based on the uplink reference sequence number, delivering the uplink data processed from one of the source RLC or the target RLC to the CU; and changing a path between the MAC and the source RLC to a path between the MAC and the target RLC in the MAC, wherein the migration information includes the uplink reference sequence number.

In an embodiment of the present disclosure, the identifying of the uplink reference sequence number may include identifying a third sequence number of uplink data for which a timer has not expired and which has not been completely received, among uplink data of the source RLC, as the uplink reference sequence number. In an embodiment of the present disclosure, the method may further include: identifying a fourth sequence number of uplink data for which the timer has expired and which has not been completely received among the uplink data of the source RLC and a fifth sequence number which is a largest sequence number among the uplink data of the source RLC; and transmitting an acknowledgement (ACK) message or a negative acknowledgement (NACK) message for the uplink data based on the third sequence number, the fourth sequence number, and the fifth sequence number.

In an embodiment of the present disclosure, the transmitting of the ACK message or the NACK message for the uplink data may include transmitting an ACK message for uplink data having a sequence number less than the fourth sequence number.

In an embodiment of the present disclosure, the method may further include migrating, to a buffer of the target RLC, uplink data stored in a buffer of the source RLC and having a sequence number greater than the third sequence number and less than the fourth sequence number.

In an embodiment of the present disclosure, the method may further include: obtaining, from the MAC, a reception status message including an acknowledgement (ACK) message or a negative acknowledgement (NACK) message for the downlink data received by a user equipment (UE); based on the downlink reference sequence number and the reception status message, generating a first reception status message to be processed in the source RLC or a second reception status message to be processed in the target RLC; and forwarding the first reception status message or the second reception status message to the source RLC or the target RLC.

In an embodiment of the present disclosure, the generating of the first reception status message to be processed in the source RLC or the second reception status message to be processed in the target RLC based on the downlink reference sequence number and the reception status message may include generating the first reception status message to be processed in the source RLC by using a reception status message for downlink data having a sequence number less than the downlink reference sequence number, and generating the second reception status message to be processed in the source RLC by using a reception status message for downlink data having a sequence number greater than or equal to the downlink reference sequence number.

In an embodiment of the present disclosure, the method may further include identifying that there is no downlink data to be retransmitted to the UE when the first sequence number for downlink data to be newly generated in the target RLC and the second sequence number which is the smallest sequence number for downlink data for which an acknowledgement (ACK) has not been received from the terminal are the same based on the delivered downlink reference sequence number information.

In an embodiment of the present disclosure, an electronic device for performing radio link control (RLC) migration of a wireless network system may include a memory storing one or more instructions, and at least one processor configured to execute the one or more instructions stored in the memory. In an embodiment of the present disclosure, the at least one processor may be configured to execute the one or more instructions to cause the electronic device to, based on a scaling situation, identify a source RLC of a first distributed unit (DU) from which data is to be migrated and a target RLC of a second DU to which the data is to be migrated from the source RLC. In an embodiment of the present disclosure, the at least one processor may be configured to execute the one or more instructions to cause the electronic device to transmit, to the source RLC, a data forwarding command from the source RLC to the target RLC. In an embodiment of the present disclosure, the at least one processor may execute the one or more instructions to cause the electronic device to, based on a time point of the forwarding command, identify a downlink reference sequence number for downlink data obtained from a centralized unit (CU). In an embodiment of the present disclosure, the at least one processor may be configured to execute the one or more instructions to cause the electronic device to deliver migration information of the source RLC to the target RLC. In an embodiment of the present disclosure, the at least one processor may be configured to execute the one or more instructions to cause the electronic device to, based on the downlink reference sequence number, deliver the downlink data processed from one of the source RLC or the target RLC to a medium access control (MAC) of the second DU. In an embodiment of the present disclosure, the at least one processor may be configured to execute the one or more instructions to cause the electronic device to change an F1-U interface of the CU to the CU and the target RLC.

In an embodiment of the present disclosure, the scaling situation may include at least one of a scale-in situation or a scale-out situation.

In an embodiment of the present disclosure, the at least one processor may be configured to execute the one or more instructions to cause the electronic device to identify a UE to be migrated from the source RLC, deliver a context of the UE from the source RLC to the target RLC, and configure a radio bearer of the target RLC.

In an embodiment of the present disclosure, the migration information may include at least one of cell index information, user equipment identification (UE ID) information, radio bearer index information, or information of the downlink reference sequence number.

In an embodiment of the present disclosure, the at least one processor may be configured to execute the one or more instructions to cause the electronic device to update a first sequence number for downlink data to be newly generated in the target RLC and a second sequence number, which is a smallest sequence number for downlink data for which an acknowledgement (ACK) has not been received from a terminal, based on the delivered downlink reference sequence number information, and set a pollbit in the downlink data to be transmitted through at least one radio bearer of the second DU.

In an embodiment of the present disclosure, the at least one processor may be configured to execute the one or more instructions to cause the electronic device to, when the downlink data is downlink data having a sequence number greater than or equal to the downlink reference sequence number, forward the downlink data from the source RLC to the target RLC, deliver the downlink data processed from the target RLC to the MAC of the second DU, and when the downlink data is downlink data having a sequence number less than the downlink reference sequence number, deliver the downlink data processed from the source RLC to the MAC of the second DU.

In an embodiment of the present disclosure, the at least one processor may be configured to execute the one or more instructions to cause the electronic device to identify an uplink reference sequence number for uplink data obtained from the MAC of the second DU based on the time point of the forwarding command, deliver the uplink data processed from one of the source RLC or the target RLC to the CU based on the uplink reference sequence number, and change a path between the MAC and the source RLC to a path between the MAC and the target RLC in the MAC. The migration information may include the uplink reference sequence number.

In an embodiment of the present disclosure, the at least one processor may be configured to execute the one or more instructions to cause the electronic device to migrate, to a buffer of the target RLC, uplink data stored in a buffer of the source RLC and having a sequence number greater than a third sequence number and less than the fourth sequence number.

In an embodiment of the present disclosure, the at least one processor may be configured to execute the one or more instructions to cause the electronic device to transmit an acknowledgement message for uplink data having a sequence number less than the fourth sequence number.

In an embodiment of the present disclosure, the at least one processor may be configured to execute the one or more instructions to cause the electronic device to obtain, from the MAC, a reception status message including an acknowledgement (ACK) message or a negative acknowledgement (NACK) message for the downlink data received by a UE, generate a first reception status message to be processed in the source RLC or a second reception status message to be processed in the target RLC, based on the downlink reference sequence number and the reception status message, and forward the first reception status message or the second reception status message to the source RLC or the target RLC.

In an embodiment of the present disclosure, the at least one processor may be configured to execute the one or more instructions to cause the electronic device to generate the first reception status message to be processed in the source RLC by using a reception status message for downlink data having a sequence number less than or equal to the downlink reference sequence number, and generate the second reception status message to be processed in the source RLC by using a reception status message for downlink data having a sequence number greater than or equal to the downlink reference sequence number.

In an embodiment of the present disclosure, the at least one processor may be configured to execute the one or more instructions to cause the electronic device to identify that there is no downlink data to be retransmitted to the UE when the first sequence number for downlink data to be newly generated in the target RLC and the second sequence number which is the smallest sequence number for downlink data for which an acknowledgement (ACK) has not been received from the terminal are the same based on the delivered downlink reference sequence number information.

A machine-readable storage medium may be provided in the form of a non-transitory storage medium. Here, 'non-transitory' means that the storage medium does not include a signal (e.g., electromagnetic waves) and is tangible, but does not distinguish whether data is stored semi-permanently or temporarily in the storage medium. For example, the "non-transitory storage medium" may include a buffer in which data is temporarily stored.

According to an embodiment, a method according to various embodiments disclosed herein may be included and provided in a computer program product. The computer program product may be traded between a seller and a buyer as a product. The computer program product may be distributed in the form of a machine-readable storage medium (e.g., a compact disc read-only memory (CD-ROM)), or may be distributed (e.g., downloaded or uploaded) online through an application store or directly between two UEs (e.g., smartphones). In the case of online distribution, at least a part of the computer program product (e.g., a downloadable app) may be at least temporarily stored in a machine-readable storage medium such as a memory of a manufacturer's server, a server of an application store, or a relay server, or may be temporarily generated.

## Claims

1. A method of performing radio link control (RLC) migration of a wireless network system, the method comprising:
based on a scaling situation, identifying a source RLC of a first distributed unit (DU) from which data is to be migrated and a target RLC of a second DU to which the data is to be migrated from the source RLC (S410);
transmitting, to the source RLC, a data forwarding command from the source RLC to the target RLC (S420);
identifying, based on a time point of the data forwarding command, a downlink reference sequence number for downlink data obtained from a centralized unit (CU) (S430);
delivering migration information of the source RLC to the target RLC (S440);
delivering, based on the downlink reference sequence number, the downlink data processed from one of the source RLC or the target RLC to a medium access control (MAC) of the second DU (S450); and
changing an F1-U interface of the CU to the CU and the target RLC (S460).

2. The method of claim 1, wherein the scaling situation comprises at least one of a scale-in situation or a scale-out situation.

3. The method of claim 1 or 2, further comprising:
identifying a user equipment (UE) to be migrated from the source RLC;
delivering a context of the UE from the source RLC to the target RLC; and
configuring a radio bearer of the target RLC.

4. The method of any one of claims 1 to 3, wherein the migration information comprises at least one of cell index information, user equipment identification (UE ID) information, radio bearer index information, or information of the downlink reference sequence number.

5. The method of claim 4, further comprising:
updating, based on the delivered downlink reference sequence number information, a first sequence number for downlink data to be generated in the target RLC and a second sequence number which is a smallest sequence number for downlink data for which an acknowledgement (ACK) has not been received from a terminal; and
setting a pollbit in the downlink data to be transmitted through at least one radio bearer of the second DU.

6. The method of any one of claims 1 to 5, wherein the delivering of the downlink data processed from one of the source RLC or the target RLC to the MAC of the second DU comprises:
when the downlink data is downlink data having a sequence number greater than or equal to the downlink reference sequence number, forwarding the downlink data from the source RLC to the target RLC, and delivering the downlink data processed from the target RLC to the MAC of the second DU, and
when the downlink data is downlink data having a sequence number less than the downlink reference sequence number, delivering the downlink data processed from the source RLC to the MAC of the second DU.

7. The method of any one of claims 1 to 6, further comprising:
identifying, based on the time point of the forwarding command, an uplink reference sequence number for uplink data obtained from the MAC of the second DU (S1030);
delivering, based on the uplink reference sequence number, the uplink data processed from one of the source RLC or the target RLC to the CU (S1050); and
changing a path between the MAC and the source RLC to a path between the MAC and the target RLC in the MAC (S1060),
wherein the migration information comprises the uplink reference sequence number.

8. The method of claim 7, wherein the identifying of the uplink reference sequence number comprises identifying a third sequence number of uplink data for which a timer has not expired and which has not been completely received, among uplink data of the source RLC, as the uplink reference sequence number, and
wherein the method further comprises:
identifying a fourth sequence number of uplink data of which the timer has expired and which has not been completely received among the uplink data of the source RLC and a fifth sequence number which is a largest sequence number among the uplink data of the source RLC; and
transmitting an acknowledgement (ACK) message or a negative acknowledgement (NACK) message for the uplink data, based on the third sequence number, the fourth sequence number, and the fifth sequence number.

9. The method of claim 8, wherein the transmitting the ACK message or the NACK message for the uplink data comprises transmitting the ACK message to uplink data having a sequence number that is less than the fourth sequence number.

10. The method of claim 8 or 9, further comprising migrating, to a buffer of the target RLC, uplink data stored in a buffer of the source RLC and having a sequence number that is greater than the third sequence number and less than the fourth sequence number.

11. The method of any one of claims 1 to 10, further comprising:
obtaining, from the MAC, a reception status message comprising an ACK message or a NACK message for the downlink data received by a UE (S1150);
generating, based on the downlink reference sequence number and the reception status message, a first reception status message to be processed in the source RLC or a second reception status message to be processed in the target RLC (S1560); and
forwarding the first reception status message or the second reception status message to the source RLC or the target RLC (S1570).

12. The method of claim 11, wherein the generating of the first reception status message to be processed in the source RLC or the second reception status message to be processed in the target RLC, based on the downlink reference sequence number and the reception status message, comprises
generating the first reception status message to be processed in the source RLC by using a reception status message for downlink data having a sequence number that is less than the downlink reference sequence number, and generating the second reception status message to be processed in the source RLC by using a reception status message for downlink data having a sequence number that is greater than or equal to the downlink reference sequence number.

13. The method of claim 11 or 12, further comprising, when the first sequence number for downlink data to be newly generated in the target RLC and the second sequence number which is the smallest sequence number for downlink data for which an acknowledgement (ACK) has not been received from the UE are same, identifying that there is no downlink data to be retransmitted to the UEbased on the delivered downlink reference sequence number information.

14. A non-transitory computer-readable recording medium having recorded thereon a program for executing the method of any one of claims 1 to 13 on a computer.

15. An electronic device (2000) for performing radio link control (RLC) migration of a wireless network system, the electronic device comprising:
a memory (2030) storing one or more instructions; and
at least one processor (2020) configured to execute the one or more instructions stored in the memory,
wherein the one or more instructions, when executed by the at least one processor, cause the electronic device to:
based on a scaling situation, identify a source RLC of a first distributed unit (DU) from which data is to be migrated and a target RLC of a second DU to which the data is to be migrated from the source RLC;
transmit, to the source RLC, a data forwarding command from the source RLC to the target RLC;
identify, based on a time point of the forwarding command, a downlink reference sequence number for downlink data obtained from a centralized unit (CU);
deliver migration information of the source RLC to the target RLC;
deliver, based on the downlink reference sequence number, the downlink data processed from one of the source RLC or the target RLC to a medium access control (MAC) of the second DU; and
change an F1-U interface of the CU to the CU and the target RLC.
